# EUROPEAN PATENT APPLICATION

(11) **EP 4 734 422 A1**
(43) Date of publication of application: **29.04.2026**
(21) Application number: 23942685.1
(22) Date of filing: 25.06.2023
(51) Int. Cl.: H04L 5/00

(54) **INDICATION METHODS AND APPARATUSES, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: CHI, Liangang, Beijing 100085 (CN)
(74) Representative: Dehns Germany Partnerschaft mbB
(86) International application number: PCT/CN2023/102224
(87) International publication number: WO 2025/000154

(57) **Abstract**

Provided in the present disclosure are an indication method and apparatus, and a device and a storage medium. The method comprises: a network device sending at least one of first information and second information, wherein the first information is used for indicating the position of an orthogonal time frequency and space (OTFS) scheduling unit in a time-frequency domain, and the second information is used for indicating the position where user data is borne in the OTFS scheduling unit. The indication methods provided in the present application are used for indicating a resource position where user data is borne in an OTFS system, so as to realize successful sending and/or receiving of data in the OTFS system.

## Description

### FIELD

The present disclosure relates to the field of communication technology, in particular to an indication method, an indication apparatus, a communication device, a communication system and a storage medium.

### BACKGROUND

Along with the large-scale development of high-speed rail and the growing popularization of highway vehicle communication, a wireless communication system in a high-speed mobile environment has attracted widespread attention. In the high-speed mobile environment, a movement speed of a terminal is relatively high, so such problems for the wireless communication as fast time-varying fading, Doppler shift and Doppler spread usually exist. In order to solve these problems, an orthogonal time frequency and space (OTFS) communication system is introduced. OTFS is a two-dimensional modulation scheme for performing the modulation in a delay-Doppler (DD) domain, and through a series of two-dimensional transformations, a doubly dispersive channel is transformed into an approximately non-fading channel in the delay-Doppler domain, so as to achieve a more significant performance gain. Hence, the OTFS system has a broad application prospect in the communication field.

However, how to implement the transmission and reception of data in the OTFS system is currently an issue requiring urgent solutions.

### SUMMARY

An object of the present disclosure is to provide an indication method, an indication apparatus, a communication device, a communication system and a storage medium.

In a first aspect, the present disclosure provides in some embodiments an indication method, including: sending, by a network device, at least one of first information or second information. The first information is used to indicate a position of an OTFS scheduling unit in a time-frequency domain, and the second information is used to indicate a position in the OTFS scheduling unit for carrying user data.

In a second aspect, the present disclosure provides in some embodiments an indication method, including: receiving, by a terminal, at least one of first information or second information. The first information is used to indicate a position of an OTFS scheduling unit in a time-frequency domain, and the second information is used to indicate a position in the OTFS scheduling unit for carrying user data.

In a third aspect, the present disclosure provides in some embodiments an indication method, including: sending, by a network device, at least one of first information or second information, the first information being used to indicate a position of an OTFS scheduling unit in a time-frequency domain, and the second information being used to indicate a position in the OTFS scheduling unit for carrying user data; and receiving, by a terminal, the at least one of the first information or the second information.

In a fourth aspect, the present disclosure provides in some embodiments a first indication apparatus, including: a sending module configured to send at least one of first information or second information. The first information is used to indicate a position of an OTFS scheduling unit in a time-frequency domain, and the second information is used to indicate a position in the OTFS scheduling unit for carrying user data.

In a fifth aspect, the present disclosure provides in some embodiments a second indication apparatus, including: a reception module configured to receive at least one of first information or second information. The first information is used to indicate a position of an OTFS scheduling unit in a time-frequency domain, and the second information is used to indicate a position in the OTFS scheduling unit for carrying user data.

In a sixth aspect, the present disclosure provides in some embodiments a communication device, including one or more processors. The one or more processors are configured to call an instruction to enable the communication device to implement the indication methods in the first aspect and the second aspect.

In a seventh aspect, the present disclosure provides in some embodiments a communication system, including a terminal and a network device. The terminal is configured to implement the indication method in the first aspect, and the network device is configured to implement the indication method in the second aspect.

In an eighth aspect, the present disclosure provides in some embodiments a storage medium storing therein an instruction. The instruction is executed by a communication device to implement the indication methods in the first aspect or the second aspect.

### BRIEF DESCRIPTION OF THE DRAWINGS

The above-mentioned and/or other aspects and advantages of the present disclosure may become apparent and easily understandable in the following description in conjunction with the drawings. In these drawings:
FIG. 1 is a schematic view showing architecture of a communication system according to an embodiment of the present disclosure;
FIG. 2A is a schematic view showing an interaction of an indication method according to an embodiment of the present disclosure;

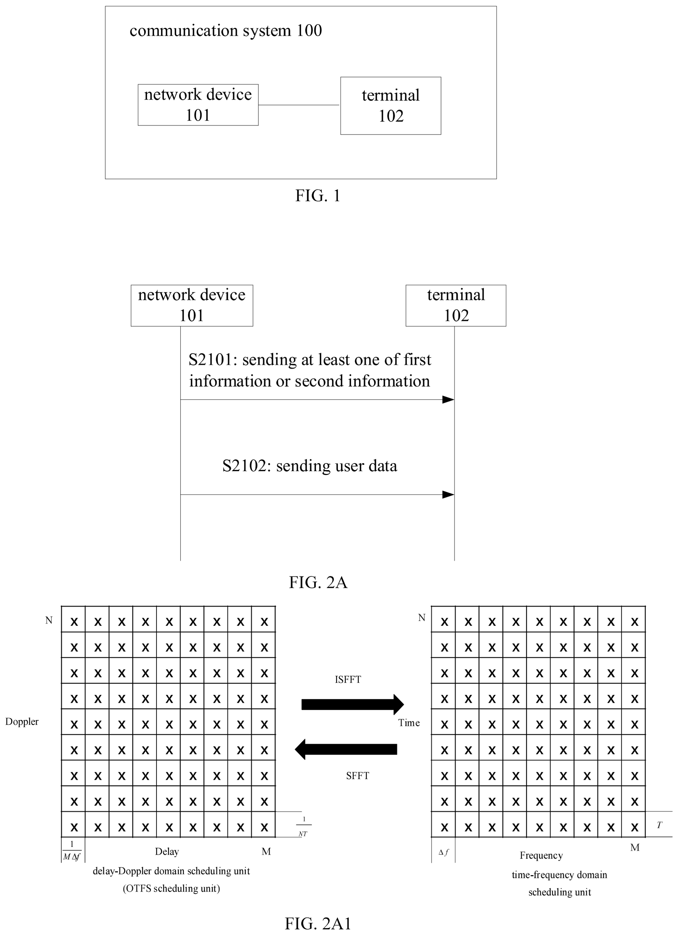

FIG. 2A1 is a schematic view showing a transformation between a DD domain and a time-frequency domain according to an embodiment of the present disclosure;

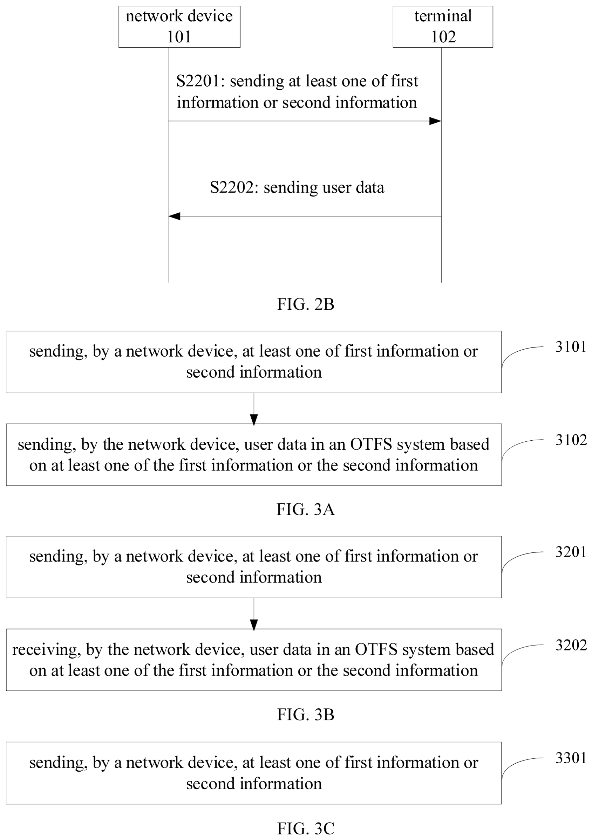

FIG. 2B is a schematic view showing an interaction of the indication method according to an embodiment of the present disclosure;
FIGs. 3A to 3C are flow charts of an indication method according to an embodiment of the present disclosure;

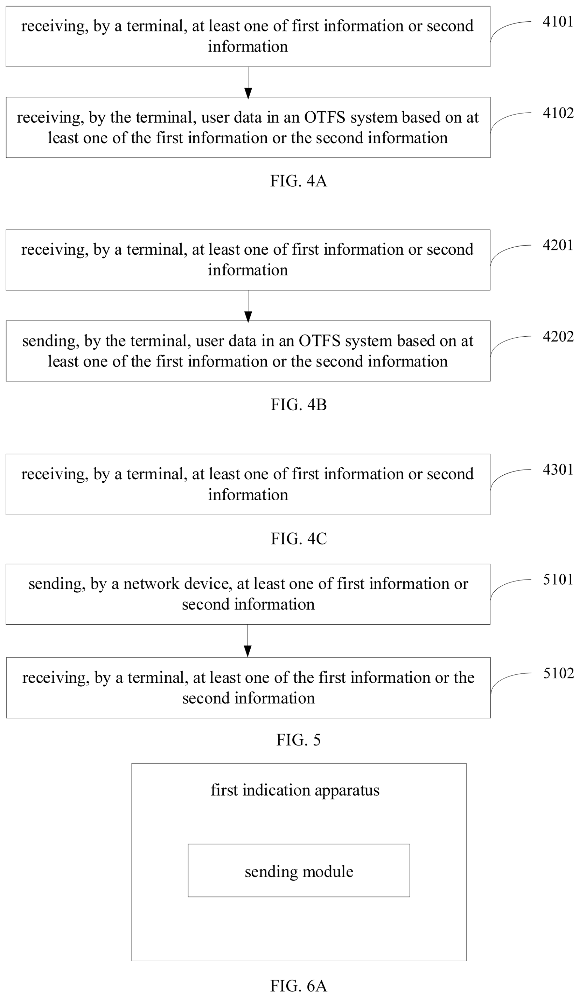

FIGs. 4A to 4C are flow charts of an indication method according to an embodiment of the present disclosure;
FIG. 5 is a flow chart of an indication method according to an embodiment of the present disclosure;
FIG. 6A is a schematic view showing a first indication apparatus according to an embodiment of the present disclosure;

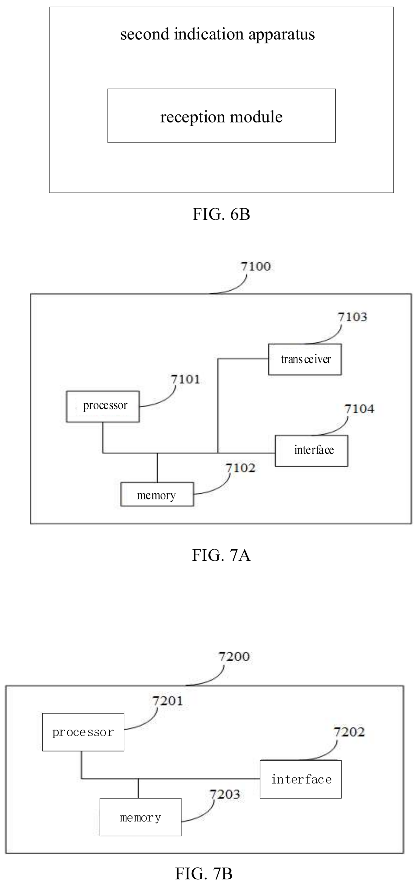

FIG. 6B is a schematic view showing a second indication apparatus according to an embodiment of the present disclosure;
FIG. 7A is a schematic view showing a communication device according to an embodiment of the present disclosure; and
FIG. 7B is a schematic view showing a chip according to an embodiment of the present disclosure.

### DETAILED DESCRIPTION

The present disclosure provides n some embodiments an indication method, an indication apparatus, a communication device, a communication system and a storage medium.

In a first aspect, the present disclosure provides in some embodiments an indication method, which includes: sending, by a network device, at least one of first information or second information. The first information is used to indicate a position of an OTFS scheduling unit in a time-frequency domain, and the second information is used to indicate a position in the OTFS scheduling unit for carrying user data.

In the embodiments of the present disclosure, the network device sends at least one of the first information or the second information. The first information is used to indicate the position of the OTFS scheduling unit in the time-frequency domain, and the second information is used to indicate the position in the OTFS scheduling unit for carrying the user data. Optionally, the network device sends at least one of the first information or the second information to a terminal, and the first information and the second information are used by the network device and the terminal to receive and/or send the user data in an OTFS system. Optionally, the user data in the OTFS system is data in a DD domain, so during the transmission of the user data in the OTFS system, a data sending end needs to transform the user data from the DD domain to the time-frequency domain, transform the user data from the time-frequency domain to a time domain, and then send the user data. Upon the receipt of the data, a data receiving end needs to transform the received data from the time domain to the time-frequency domain, and then transform the data from the time-frequency domain to the DD domain to obtain the user data. In other words, the data in the time domain is sent by the data sending end, the data in the time domain is received by the data receiving end, but the data in the time domain undergoes the transformations from/to the time-frequency domain and the DD domain. Based on the above, in the embodiments of the present disclosure, the network device sends at least one of the first information or the second information to the terminal, the first information is used to determine a corresponding time-frequency position after the OTFS scheduling unit carrying the user data is transformed to be in the time-frequency domain, and the second information is used to determine the positions in the OTFS scheduling unit for carrying the user data. Hence, in a case that the user data is transmitted between the network device and the terminal in the OTFS system, the data sending end in the network device and the terminal carries the user data in the OTFS scheduling unit based on the second information, i.e., carries the user data at the position indicated in the second information, transforms the OTFS scheduling unit carrying the user data to be in the time-frequency domain, then transforms the user data from the time-frequency domain to the time domain, and then sends the data to the data receiving end. Upon the receipt of the data, the data receiving end transforms the received data from the time domain to the time-frequency domain, determines a corresponding position of the OTFS scheduling unit carrying the user data in the time-frequency domain based on the first information, then transforms the corresponding time-frequency domain position of the OTFS scheduling unit carrying the user data from the time-frequency domain to the DD domain to obtain the OTFS scheduling unit, and then determines the position for carrying the user data in the OTFS scheduling unit based on the second information, so as to send and receive the user data in the OTFS system. Based on the above, the present disclosure provides in some embodiments an indication method for indicating a resource position for carrying the user data in the OTFS system, so as to send and/or receive the user data successfully in the OTFS system.

In some embodiments of the first aspect of the present disclosure, the OTFS scheduling unit includes at least one OTFS symbol in a delay domain and at least one OTFS subcarrier in a Doppler domain.

In some embodiments of the first aspect of the present disclosure, the first information includes at least one of: a first indication; or a second indication. The first indication is used to indicate a first time-domain position of the OTFS scheduling unit, and the second indication is used to indicate a first frequency-domain position of the OTFS scheduling unit.

In some embodiments of the first aspect of the present disclosure, the first indication is used to indicate at least two of a start position, a length or an end position of the first time-domain position; and/or the second indication is used to indicate at least two of a start position, a length or an end position of the first frequency-domain position.

In some embodiments of the first aspect of the present disclosure, the first indication includes a first bitmap, each bit in the first bitmap corresponds to a time-domain position, and a bit value carried by a bit in the first bitmap is used to indicate whether the time-domain position corresponding to the bit in the first bitmap is the first time-domain position; and/or the second indication includes a second bitmap, each bit in the second bitmap corresponds to a frequency-domain position, and a bit value carried by a bit in the second bitmap is used to indicate whether the frequency-domain position corresponding to the bit in the second bitmap is the first frequency-domain position.

In some embodiments of the first aspect of the present disclosure, the first indication is used to indicate at least one of a period of the first time-domain position, a start position of the first time-domain position within the period, or a length of the first time-domain position within the period; and/or the second indication is used to indicate at least one of a period of the first frequency-domain position, a start position of the first frequency-domain position within the period, or a length of the first frequency-domain position within the period.

In some embodiments of the first aspect of the present disclosure, indication granularity of the first indication is at least one slot; and indication granularity of the second indication is at least one subband.

In some embodiments of the first aspect of the present disclosure, the slot includes L consecutive symbols in a time domain, and the subband includes K consecutive subcarriers in a frequency domain, where L and K are both positive integers.

In the above-mentioned embodiments of the present disclosure, a method about how to indicate, via the first information, the position of the OTFS scheduling unit in the time-frequency domain is specifically defined, so as to successfully indicate the position of the OTFS scheduling unit in the time-frequency domain. In this way, the network device successfully indicate the position of the OTFS scheduling unit in the time-frequency domain to a terminal, so that the network device and the terminal perform the sending and/or reception of the user data successfully in the OTFS system based on the first information.

In some embodiments of the first aspect of the present disclosure, the second information includes at least one of: a third indication; or a fourth indication. The third indication is used to indicate a first delay-domain position in the OTFS scheduling unit for carrying the user data, and the fourth indication is used to indicate a first Doppler-domain position in the OTFS scheduling unit for carrying the user data.

In some embodiments of the first aspect of the present disclosure, the third indication is used to indicate at least two of a start position, a length or an end position of the first delay-domain position; and/or the fourth indication is used to indicate at least two of a start position, a length or an end position of the first Doppler-domain position.

In some embodiments of the first aspect of the present disclosure, the third indication includes a third bitmap, each bit in the third bitmap corresponds to a delay-domain position, and a bit value carried by a bit in the third bitmap is used to indicate whether the delay-domain position corresponding to the bit in the third bitmap is the first delay-domain position; and/or the fourth indication includes a fourth bitmap, each bit in the fourth bitmap corresponds to a Doppler-domain position, and a bit value carried by a bit in the fourth bitmap is used to indicate whether the Doppler-domain position corresponding to the bit in the fourth bitmap is the first Doppler-domain position.

In some embodiments of the first aspect of the present disclosure, the third indication is used to indicate at least one of a period of the first delay-domain position, a start position of the first delay-domain position within the period, or a length of the first delay-domain position within the period; and/or the fourth indication is used to indicate at least one of a period of the first Doppler-domain position, a start position of the first Doppler-domain position within the period, or a length of the first Doppler-domain position within the period.

In some embodiments of the first aspect of the present disclosure, indication granularity of the third indication is P OTFS symbols; and indication granularity of the fourth indication is Q OTFS subcarriers, where P and Q are both positive integers.

In some embodiments of the first aspect of the present disclosure, P is less than or equal to a total number of OTFS symbols included in the OTFS scheduling unit in the delay domain, and Q is less than or equal to a total number of OTFS subcarriers included in the OTFS scheduling unit in the Doppler domain.

In the above-mentioned embodiments of the present disclosure, a method about how to indicate, via the second information, the position in the OTFS scheduling unit for carrying the user data is specifically defined, so as to successfully indicate the position in the OTFS scheduling unit for carrying the user data. In this way, the network device successfully indicates the position in the OTFS scheduling unit for carrying the user data to the terminal, so that the network device and the terminal performs the sending and/or reception of the user data in the OTFS system successfully based on the second information.

In some embodiments of the first aspect of the present disclosure, the indication method further includes at least one of: sending, by the network device, the user data in the OTFS system based on at least one of the first information or the second information; or receiving, by the network device, the user data in the OTFS system based on at least one of the first information or the second information.

In the above-mentioned embodiments of the present disclosure, after sending at least one of the first information or the second information, the network device sends the user data in the OTFS system based on at least one of the first information or the second information, and/or receives the user data in the OTFS system based on at least one of the first information or the second information, so as to perform the sending and reception of the user data in the OTFS system.

In a second aspect, the present disclosure provides in some embodiments an indication method, including: receiving, by a terminal, at least one of first information or second information. The first information is used to indicate a position of an OTFS scheduling unit in a time-frequency domain, and the second information is used to indicate a position in the OTFS scheduling unit for carrying user data.

In the embodiments of the present disclosure, the terminal receives at least one of the first information or the second information. The first information is used to indicate the position of the OTFS scheduling unit in the time-frequency domain, and the second information is used to indicate the position in the OTFS scheduling unit for carrying the user data. Optionally, the terminal receives at least one of the first information or the second information sent by a network device, and the first information and the second information are used by the network device and the terminal to receive and/or send the user data in an OTFS system. Optionally, the user data in the OTFS system is data in a DD domain, so during the transmission of the user data in the OTFS system, a data sending end needs to transform the user data from the DD domain to the time-frequency domain, transform the user data from the time-frequency domain to a time domain, and then send the user data. Upon the receipt of the data, a data receiving end needs to transform the received data from the time domain to the time-frequency domain, and then transform the data from the time-frequency domain to the DD domain to obtain the user data. Based on the above, in the embodiments of the present disclosure, the network device sends at least one of the first information or the second information to the terminal, the first information is used to determine a corresponding time-frequency position after the OTFS scheduling unit carrying the user data is transformed to be in the time-frequency domain, and the second information is used to determine the positions in the OTFS scheduling unit for carrying the user data. Hence, in a case that the user data is transmitted between the network device and the terminal, the data sending end in the network device and the terminal carries the user data in the OTFS scheduling unit based on the second information, i.e., carries the user data at the position indicated in the second information, transforms the OTFS scheduling unit carrying the user data to be in the time-frequency domain, then transforms the user data from the time-frequency domain to the time domain, and then sends the data to the data receiving end. Upon the receipt of the data, the data receiving end transforms the received data from the time domain to the time-frequency domain, determines a corresponding position of the OTFS scheduling unit carrying the user data in the time-frequency domain based on the first information, then transforms the corresponding time-frequency domain position of the OTFS scheduling unit carrying the user data from the time-frequency domain to the DD domain to obtain the OTFS scheduling unit, and then determines the position for carrying the user data in the OTFS scheduling unit based on the second information, so as to send and receive the user data in the OTFS system. Based on the above, the present disclosure provides in some embodiments an indication method for indicating a resource position for carrying the user data in the OTFS system, so as to send and/or receive the user data successfully in the OTFS system.

In some embodiments of the second aspect of the present disclosure, the OTFS scheduling unit includes at least one OTFS symbol in a delay domain and at least one OTFS subcarrier in a Doppler domain.

In some embodiments of the second aspect of the present disclosure, the first information includes at least one of: a first indication; or a second indication. The first indication is used to indicate a first time-domain position of the OTFS scheduling unit, and the second indication is used to indicate a first frequency-domain position of the OTFS scheduling unit.

In some embodiments of the second aspect of the present disclosure, the first indication is used to indicate at least two of a start position, a length or an end position of the first time-domain position; and/or the second indication is used to indicate at least two of a start position, a length or an end position of the first frequency-domain position.

In some embodiments of the second aspect of the present disclosure, the first indication includes a first bitmap, each bit in the first bitmap corresponds to a time-domain position, and a bit value carried by a bit in the first bitmap is used to indicate whether the time-domain position corresponding to the bit in the first bitmap is the first time-domain position; and/or the second indication includes a second bitmap, each bit in the second bitmap corresponds to a frequency-domain position, and a bit value carried by a bit in the second bitmap is used to indicate whether the frequency-domain position corresponding to the bit in the second bitmap is the first frequency-domain position.

In some embodiments of the second aspect of the present disclosure, the first indication is used to indicate at least one of a period of the first time-domain position, a start position of the first time-domain position within the period, or a length of the first time-domain position within the period; and/or the second indication is used to indicate at least one of a period of the first frequency-domain position, a start position of the first frequency-domain position within the period, or a length of the first frequency-domain position within the period.

In some embodiments of the second aspect of the present disclosure, indication granularity of the first indication is at least one slot; and indication granularity of the second indication is at least one subband.

In some embodiments of the second aspect of the present disclosure, the slot includes L consecutive symbols in a time domain, and the subband includes K consecutive subcarriers in a frequency domain, where L and K are both positive integers.

In some embodiments of the second aspect of the present disclosure, the second information includes at least one of: a third indication; or a fourth indication. The third indication is used to indicate a first delay-domain position in the OTFS scheduling unit for carrying the user data, and the fourth indication is used to indicate a first Doppler-domain position in the OTFS scheduling unit for carrying the user data.

In some embodiments of the second aspect of the present disclosure, the third indication is used to indicate at least two of a start position, a length or an end position of the first delay-domain position; and/or the fourth indication is used to indicate at least two of a start position, a length or an end position of the first Doppler-domain position.

In some embodiments of the second aspect of the present disclosure, the third indication includes a third bitmap, each bit in the third bitmap corresponds to a delay-domain position, and a bit value carried by a bit in the third bitmap is used to indicate whether the delay-domain position corresponding to the bit in the third bitmap is the first delay-domain position; and/or the fourth indication includes a fourth bitmap, each bit in the fourth bitmap corresponds to a Doppler-domain position, and a bit value carried by a bit in the fourth bitmap is used to indicate whether the Doppler-domain position corresponding to the bit in the fourth bitmap is the first Doppler-domain position.

In some embodiments of the second aspect of the present disclosure, the third indication is used to indicate at least one of a period of the first delay-domain position, a start position of the first delay-domain position within the period, or a length of the first delay-domain position within the period; and/or the fourth indication is used to indicate at least one of a period of the first Doppler-domain position, a start position of the first Doppler-domain position within the period, or a length of the first Doppler-domain position within the period.

In some embodiments of the second aspect of the present disclosure, indication granularity of the third indication is P OTFS symbols; and indication granularity of the fourth indication is Q OTFS subcarriers, where P and Q are both positive integers.

In some embodiments of the second aspect of the present disclosure, P is less than or equal to a total number of OTFS symbols included in the OTFS scheduling unit in the delay domain, and Q is less than or equal to a total number of OTFS subcarriers included in the OTFS scheduling unit in the Doppler domain.

In some embodiments of the second aspect of the present disclosure, the indication method further includes at least one of: receiving, by the terminal, the user data in the OTFS system based on at least one of the first information or the second information; or sending, by the terminal, the user data in the OTFS system based on at least one of the first information or the second information.

In a third aspect, the present disclosure provides in some embodiments an indication method, applied to a communication system. The communication system includes a network device and a terminal, and the indication method includes: sending, by the network device, at least one of first information or second information. The first information is used to indicate a position of an OTFS scheduling unit in a time-frequency domain, and the second information is used to indicate a position in the OTFS scheduling unit for carrying user data; and receiving, by the terminal, the at least one of the first information or the second information.

In a fourth aspect, the present disclosure provides in some embodiments a first indication apparatus, applied to a network device, including: a sending module configured to send at least one of first information or second information. The first information is used to indicate a position of an OTFS scheduling unit in a time-frequency domain, and the second information is used to indicate a position in the OTFS scheduling unit for carrying user data.

In some embodiments of the fourth aspect of the present disclosure, the OTFS scheduling unit includes at least one OTFS symbol in a delay domain and at least one OTFS subcarrier in a Doppler domain.

In some embodiments of the fourth aspect of the present disclosure, the first information includes at least one of: a first indication; or a second indication. The first indication is used to indicate a first time-domain position of the OTFS scheduling unit, and the second indication is used to indicate a first frequency-domain position of the OTFS scheduling unit.

In some embodiments of the fourth aspect of the present disclosure, the first indication is used to indicate at least two of a start position, a length or an end position of the first time-domain position; and/or the second indication is used to indicate at least two of a start position, a length or an end position of the first frequency-domain position.

In some embodiments of the fourth aspect of the present disclosure, the first indication includes a first bitmap, each bit in the first bitmap corresponds to a time-domain position, and a bit value carried by a bit in the first bitmap is used to indicate whether the time-domain position corresponding to the bit in the first bitmap is the first time-domain position; and/or the second indication includes a second bitmap, each bit in the second bitmap corresponds to a frequency-domain position, and a bit value carried by a bit in the second bitmap is used to indicate whether the frequency-domain position corresponding to the bit in the second bitmap is the first frequency-domain position.

In some embodiments of the fourth aspect of the present disclosure, the first indication is used to indicate at least one of a period of the first time-domain position, a start position of the first time-domain position within the period, or a length of the first time-domain position within the period; and/or the second indication is used to indicate at least one of a period of the first frequency-domain position, a start position of the first frequency-domain position within the period, or a length of the first frequency-domain position within the period.

In some embodiments of the fourth aspect of the present disclosure, indication granularity of the first indication is at least one slot; and indication granularity of the second indication is at least one subband.

In some embodiments of the fourth aspect of the present disclosure, the slot includes L consecutive symbols in a time domain, and the subband includes K consecutive subcarriers in a frequency domain, where L and K are both positive integers.

In some embodiments of the fourth aspect of the present disclosure, the second information includes at least one of: a third indication; or a fourth indication. The third indication is used to indicate a first delay-domain position in the OTFS scheduling unit for carrying the user data, and the fourth indication is used to indicate a first Doppler-domain position in the OTFS scheduling unit for carrying the user data.

In some embodiments of the fourth aspect of the present disclosure, the third indication is used to indicate at least two of a start position, a length or an end position of the first delay-domain position; and/or the fourth indication is used to indicate at least two of a start position, a length or an end position of the first Doppler-domain position.

In some embodiments of the fourth aspect of the present disclosure, the third indication includes a third bitmap, each bit in the third bitmap corresponds to a delay-domain position, and a bit value carried by a bit in the third bitmap is used to indicate whether the delay-domain position corresponding to the bit in the third bitmap is the first delay-domain position; and/or the fourth indication includes a fourth bitmap, each bit in the fourth bitmap corresponds to a Doppler-domain position, and a bit value carried by a bit in the fourth bitmap is used to indicate whether the Doppler-domain position corresponding to the bit in the fourth bitmap is the first Doppler-domain position.

In some embodiments of the fourth aspect of the present disclosure, the third indication is used to indicate at least one of a period of the first delay-domain position, a start position of the first delay-domain position within the period, or a length of the first delay-domain position within the period; and/or the fourth indication is used to indicate at least one of a period of the first Doppler-domain position, a start position of the first Doppler-domain position within the period, or a length of the first Doppler-domain position within the period.

In some embodiments of the fourth aspect of the present disclosure, indication granularity of the third indication is P OTFS symbols; and indication granularity of the fourth indication is Q OTFS subcarriers, where P and Q are both positive integers.

In some embodiments of the fourth aspect of the present disclosure, P is less than or equal to a total number of OTFS symbols included in the OTFS scheduling unit in the delay domain, and Q is less than or equal to a total number of OTFS subcarriers included in the OTFS scheduling unit in the Doppler domain.

In some embodiments of the fourth aspect of the present disclosure, the first indication apparatus is further configured to: send the user data in the OTFS system based on at least one of the first information or the second information; or receive the user data in the OTFS system based on at least one of the first information or the second information.

In a fifth aspect, the present disclosure provides in some embodiments a second indication apparatus, applied to a terminal, including: a reception module configured to receive at least one of first information or second information. The first information is used to indicate a position of an OTFS scheduling unit in a time-frequency domain, and the second information is used to indicate a position in the OTFS scheduling unit for carrying user data.

In some embodiments of the fifth aspect of the present disclosure, the OTFS scheduling unit includes at least one OTFS symbol in a delay domain and at least one OTFS subcarrier in a Doppler domain.

In some embodiments of the fifth aspect of the present disclosure, the first information includes at least one of: a first indication; or a second indication. The first indication is used to indicate a first time-domain position of the OTFS scheduling unit, and the second indication is used to indicate a first frequency-domain position of the OTFS scheduling unit.

In some embodiments of the fifth aspect of the present disclosure, the first indication is used to indicate at least two of a start position, a length or an end position of the first time-domain position; and/or the second indication is used to indicate at least two of a start position, a length or an end position of the first frequency-domain position.

In some embodiments of the fifth aspect of the present disclosure, the first indication includes a first bitmap, each bit in the first bitmap corresponds to a time-domain position, and a bit value carried by a bit in the first bitmap is used to indicate whether the time-domain position corresponding to the bit in the first bitmap is the first time-domain position; and/or the second indication includes a second bitmap, each bit in the second bitmap corresponds to a frequency-domain position, and a bit value carried by a bit in the second bitmap is used to indicate whether the frequency-domain position corresponding to the bit in the second bitmap is the first frequency-domain position.

In some embodiments of the fifth aspect of the present disclosure, the first indication is used to indicate at least one of a period of the first time-domain position, a start position of the first time-domain position within the period, or a length of the first time-domain position within the period; and/or the second indication is used to indicate at least one of a period of the first frequency-domain position, a start position of the first frequency-domain position within the period, or a length of the first frequency-domain position within the period.

In some embodiments of the fifth aspect of the present disclosure, indication granularity of the first indication is at least one slot; and indication granularity of the second indication is at least one subband.

In some embodiments of the fifth aspect of the present disclosure, the slot includes L consecutive symbols in a time domain, and the subband includes K consecutive subcarriers in a frequency domain, where L and K are both positive integers.

In some embodiments of the fifth aspect of the present disclosure, the second information includes at least one of: a third indication; or a fourth indication. The third indication is used to indicate a first delay-domain position in the OTFS scheduling unit for carrying the user data, and the fourth indication is used to indicate a first Doppler-domain position in the OTFS scheduling unit for carrying the user data.

In some embodiments of the fifth aspect of the present disclosure, the third indication is used to indicate at least two of a start position, a length or an end position of the first delay-domain position; and/or the fourth indication is used to indicate at least two of a start position, a length or an end position of the first Doppler-domain position.

In some embodiments of the fifth aspect of the present disclosure, the third indication includes a third bitmap, each bit in the third bitmap corresponds to a delay-domain position, and a bit value carried by a bit in the third bitmap is used to indicate whether the delay-domain position corresponding to the bit in the third bitmap is the first delay-domain position; and/or the fourth indication includes a fourth bitmap, each bit in the fourth bitmap corresponds to a Doppler-domain position, and a bit value carried by a bit in the fourth bitmap is used to indicate whether the Doppler-domain position corresponding to the bit in the fourth bitmap is the first Doppler-domain position.

In some embodiments of the fifth aspect of the present disclosure, the third indication is used to indicate at least one of a period of the first delay-domain position, a start position of the first delay-domain position within the period, or a length of the first delay-domain position within the period; and/or the fourth indication is used to indicate at least one of a period of the first Doppler-domain position, a start position of the first Doppler-domain position within the period, or a length of the first Doppler-domain position within the period.

In some embodiments of the fifth aspect of the present disclosure, indication granularity of the third indication is P OTFS symbols; and indication granularity of the fourth indication is Q OTFS subcarriers, where P and Q are both positive integers.

In some embodiments of the fifth aspect of the present disclosure, P is less than or equal to a total number of OTFS symbols included in the OTFS scheduling unit in the delay domain, and Q is less than or equal to a total number of OTFS subcarriers included in the OTFS scheduling unit in the Doppler domain.

In some embodiments of the present disclosure, the second indication apparatus is further configured to: receive the user data in the OTFS system based on at least one of the first information or the second information; or send the user data in the OTFS system based on at least one of the first information or the second information.

In a sixth aspect, the present disclosure provides in some embodiments a communication device, including: one or more processors; and one or more memories storing therein an instruction. The one or more processors are configured to call the instruction to enable the network device to implement the indication methods described in the first aspect, the second aspect, and the optional embodiments of the first aspect and the second aspect.

In a seventh aspect, the present disclosure provides in some embodiments a communication system, including a terminal and a network device. The network device is configured to implement the indication method described in the first aspect and the optional embodiments of the first aspect, and the terminal is configured to implement the indication method described in the second aspect and the optional embodiments of the second aspect.

In an eighth aspect, the present disclosure provides in some embodiments a storage medium storing therein an instruction. The instruction is executed by a communication device to implement the indication methods described in the first aspect, the second aspect, and the optional embodiments of the first aspect and the second aspect.

In a ninth aspect, the present disclosure provides in some embodiments a program product. The program product is executed by a communication device to implement the indication methods described in the first aspect, the second aspect, and the optional embodiments of the first aspect and the second aspect.

In a tenth aspect, the present disclosure provides in some embodiments a computer program. The computer program is executed by a computer to implement the indication methods described in the first aspect, the second aspect, and the optional embodiments of the first aspect and the second aspect.

It should be appreciated that, the above-mentioned first indication apparatus, second indication apparatus, communication device, communication system, storage medium, program product and computer program are all used to implement the indication method in the embodiments of the present disclosure. Hence, a beneficial effect achieved thereby may refer to those in the corresponding method, which will not be particularly defined herein.

The title of the invention has been presented in the embodiments of the present disclosure. In some embodiments of the present disclosure, the indication method may be mutually replaced with such a term as information indication method, information sending method or information reception method, the indication apparatus may be mutually replaced with such a term as information processing apparatus, information sending apparatus or information reception apparatus, and information processing system, communication system, information sending system and information reception system may be mutually replaced with each other.

The embodiments of the present disclosure are merely illustrative, rather than exhaustive, embodiments, and shall not be construed as limiting the protection scope of the present disclosure. In a case of no conflict, each step in one embodiment may be implemented as an independent embodiment, and the steps may be combined randomly. For example, a scheme in one embodiment obtained after removing part of steps may also be implemented as an independent embodiment. In addition, an order of the steps in one embodiment may be changed. Optional implementations in one embodiment may be combined randomly. Moreover, the embodiments may be combined randomly, e.g., part of, or all of, the steps in different embodiments may be combined randomly, and optional implementations in one embodiment may be combined randomly with those in the other embodiments.

In the embodiments of the present disclosure, in a case that there is no specific definition and logical conflict, the terms and/or descriptions in the embodiments have consistency, and may mutually refer to each other. Technical features in different embodiments may be combined to form a new embodiment based on an inherent logical relationship.

The terms used in the embodiments of the present disclosure are merely used to describe specific embodiments, but shall not be construed as limiting the present disclosure.

In the embodiments of the present disclosure, unless otherwise defined, an element in a singular form, e.g., "a/an", "the", "the aforesaid" or "this", indicates that there is one and merely one element, or there is one or more elements or at least one element. For example, in a case that a noun is defined with an article "a", "an" or "the", the noun after the article may be understood as in the singular form or a plural form.

In the embodiments of the present disclosure, "a plurality of" refers to two or more than two.

In some embodiments of the present disclosure, the expressions "at least one of", "one or more", "a plurality of" and "multiple" may be replaced with each other.

In the embodiments of the present disclosure, the expression "at least one of A, B, C ..." and "A and/or B and/or C ..." may include a condition where there is only one of A, B, C ..., or a condition where there are two or more of A, B, C ..., and each condition may exist independently. For example, "at least one of A, B or C" includes that there is only A, there is only B, there is only C, there are both A and B, there are both A and C, there are both B and C, and there are A, B and C. For example, A and/or B includes that there is only A, there is only B, and there are both A and B.

In some embodiments of the present disclosure, depending on the conditions, the expressions "A in one condition, and B in another condition" and "A in response to one condition, and B in response to another condition" may include: A is performed regardless of B (A in some embodiments); B is performed regardless of A (B in some embodiments); one of A and B is performed selectively (one of A and B is selected in some embodiments); and A and B are both performed (A and B are both selected in some embodiments). The same is also applied in a case that there are A, B, C, ....

In the embodiments of the present disclosure, the terms such as "first" and "second" are only used for distinguishing objects from each other, but shall not be construed as limiting a position, an order, a priority level, the quantity or content of each object. The description about the object may refer to that in the appended claims or the context in the embodiments, and a superfluous limitation is not caused due to the use of these terms. For example, in a case that the object is "field", in the terms "first field" and "second field", the words "first" and "second" are not used to limit positions or an order of the fields, i.e., the words "first" and "second" are not used to limit whether the fields are located in a same message, or an order of the first field and the second field. For another example, in a case that the object is "level", in the terms "first level" and "second level", the words "first" and "second" are not used to limit priorities of the levels. In addition, the quantity of objects is not limited by the ordinal numeral, and the quantity may be one or more. Taking "first apparatus" as an example, the quantity of apparatuses may be one or more. Moreover, the objects defined by different ordinal numerals may be the same or different. For example, in a case that the object is "apparatus", "first apparatus" and "second apparatus" may refer to a same apparatus or different apparatuses, and types of the apparatuses may be the same or different. For another example, in a case that the object is "information", "first information" and "second information" may refer to same information or different information, and contents of the information may be the same or different.

In some embodiments of the present disclosure, the expressions "including A", "containing A", "for indicating A" and "carrying A" may be interpreted as directly carrying A, or indirectly indicating A".

In some embodiments of the present disclosure, the expressions "in response to ...", "in response to determining ...", "in a case that ...", and "if ..." may be replaced with each other.

In some embodiments of the present disclosure, the expressions "greater than", "greater than or equal to", "not less than" and "or more" may be replaced with each other, and the expressions "less than", "less than or equal to", "not greater than" and "or less" may be replaced with each other.

In some embodiments of the present disclosure, the apparatus may be a physical or virtual one, and its name is not limited to those recorded in the embodiments. The terms "apparatus", "equipment", "device", "circuit", "network element", "node", "function", "unit", "section", "system", "network", "chip", "chip system", "entity" and "body" may be replaced with each other.

In some embodiments of the present disclosure, the term "network" may be interpreted as an apparatus included in a network (e.g., access network device or core network device).

In some embodiments of the present disclosure, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier" and "bandwidth part" may be replaced with each other.

In some embodiments of the present disclosure, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" and "client" may be replaced with each other.

In some embodiments of the present disclosure, an access network device, a core network device or a network device may be replaced with a terminal. For example, the embodiments of the present disclosure may also be applied to a structure in which communication between the access network device, the core network device or the network device and the terminal is substituted with communication among a plurality of terminals (e.g., also called as device-to-device (D2D) or vehicle-to-everything (V2X)). In this case, this structure is also a structure in which the terminal has all of, or part of, functions of the access network device. In addition, the terms "uplink" and "downlink" may also be replaced with terms corresponding to the communication among the terminals (e.g., sidelink). For example, an uplink channel and a downlink channel may be replaced with sidelink channel, and an uplink and a downlink may be replaced with sidelink.

In some embodiments of the present disclosure, a terminal may be replaced with an access network device, a core network device or a network device. In this case, the access network device, the core network device or the network device has all of, or part of, the functions of the terminal.

In some embodiments of the present disclosure, the collection of data and information needs to comply with relevant laws and regulations of relevant countries.

In some embodiments of the present disclosure, the collection of data and information needs to be authorized by a user.

In addition, each element, row or column in a table in the embodiments of the present disclosure may be implemented as an independent embodiment, and any combination of the elements, rows or columns may also be implemented as an independent embodiment.

The correspondence shown in each table in the present disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present disclosure, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

The term "predefined" in the embodiments of the present disclosure may be understood as "defined", "defined in advance", "stored", "pre-stored", "pre-negotiated", "preconfigured", "programmed" or "pre-programed".

FIG. 1 is a schematic view showing architecture of a communication system according to an embodiment of the present disclosure. As shown in FIG. 1, the communication system 100 includes a network device 101 and a terminal 102. Optionally, the network device includes at least one of an access network device or a core network device.

In some embodiments of the present disclosure, the terminal 102 includes, but not limited to, at least one of a mobile phone, a wearable device, an Internet of Things device, a vehicle having a communication function, a smart vehicle, a pad, a computer having a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments of the present disclosure, the access network device is a node or device via which the terminal accesses a wireless network, and the access network device includes, but not limited to, at least one of an evolved NodeB (eNB) in a 5^{th}-generation (5G) communication system, a next generation eNB (ng-eNB), a next generation NodeB (gNB), node B (NB), home node B (HNB), home evolved nodeB (HeNB), a wireless backhaul device, a radio network controller (RNC), a base station controller (BSC), a base transceiver station (BTS), a base band unit (BBU), a mobile switching center, a base station in a 6^{th}-generation (6G) communication system, an Open RAN, a cloud RAN, a base station in the other communication systems, or an access node in a wireless fidelity (Wi-Fi) system.

In some embodiments of the present disclosure, the technical solution of the present disclosure may be applied to Open RAN architecture. At this time, interfaces between the access network devices or inside the access network device involved in the embodiments of the present disclosure may be changed into internal interfaces of the Open RAN, and a process and information interaction between the internal interfaces may be achieved via software or program.

In some embodiments of the present disclosure, the access network device consists of a central unit (CU) and a distributed unit (DU). The CU is also called as control unit. Through a CU-DU structure, a protocol layer of the access network device is divided into multiple protocol layers, functions of part of the protocol layers are controlled by the CU, functions of part of, or all of, the remaining protocol layers are distributed in the DUs, and the Dus are controlled by the CU. However, the present disclosure is not limited thereto.

In some embodiments of the present disclosure, the core network device is one device which includes one or more network elements, or multiple devices or a device cluster which includes all of, or part of, one or more network devices. The network device is virtual or physical. For example, a core network includes at least one of an evolved packet core (EPC), a 5G core network (5GCN), or a next generation core (NGC).

It should be appreciated that, the communication system described in the embodiments of the present disclosure is used to describe the technical solutions of the present disclosure in a clearer manner, but shall not be construed as limiting the technical solutions provided in the embodiments of the present disclosure. As is known in the art, along with the evolution of the system architecture as well as the emergence of new service scenarios, the technical solutions are also applicable to similar technical problems.

The following embodiments of the present disclosure may be applied to, but not limited to, the communication system 100 in FIG. 1, or part of bodies of the communication system 100. The bodies in FIG. 1 are for illustrative purposes, and the communication system may include all or part of the bodies in FIG. 1, and the other bodies not shown in FIG. 1. The quantity of bodies and the forms of the bodies may be random, a connection relationship among the bodies is for illustratively purposes only, the bodies may be or may not be coupled to each other, and the connection may be in any form, e.g., direct connection or indirect connection, wired connection or wireless connection.

The embodiments of the present disclosure may be applied to long term evolution (LTE), LTE-advanced (LTE-A), LTE-beyond (LTE-B), SUPER 3G, IMT-advanced, 4^{th} generation mobile communication system (4G), 5^{th} generation mobile communication system (5G), 5G new ratio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, vehicle-to-everything (V2X), a system using the other indication method, or a next system extended based on these systems. In addition, a plurality of systems may also be used in combination (e.g., a combination of LTE or LTE-A and 5G).

FIG. 2A is a schematic view showing an interaction of an indication method according to an embodiment of the present disclosure. As shown in FIG. 2A, the indication method involved in the embodiments of the present disclosure is applied to the communication system 100, and includes the following steps.

**Step 2101:** a network device sends at least one of first information or second information.

Optionally, in some embodiments of the present disclosure, the first information is used to indicate a position of an OTFS scheduling unit in a time-frequency domain, and the second information is used to indicate a position in the OTFS scheduling unit for carrying user data.

Optionally, the network device may send the first information before the second information, or send the first information and the second information simultaneously, or send the first information after the second information, which will not be particularly defined herein. It should be appreciated that, the first information and the second information are carried via same signaling.

Optionally, the OTFS scheduling unit is a unit in a DD domain. Optionally, the OTFS scheduling unit includes at least one OTFS symbol in a delay domain and at least one OTFS subcarrier in a Doppler domain. For example, presumed that the OTFS scheduling unit includes M OTFS symbols in the delay domain and N OTFS subcarriers in the Doppler domain, where M and N are both positive integers greater than 1, a symbol spacing along a delay domain direction for the OTFS scheduling unit is 1/(MΔf), and a spacing along a Doppler shift direction is 1/(NT), where Δf represents a spacing along a frequency domain direction in the time-frequency domain, and T represents a spacing in a time domain direction in the time-frequency domain.

Optionally, the network device sends at least one of the first information or the second information to a terminal. Optionally, in some embodiments of the present disclosure, the terminal receives at least one of the first information or the second information. The first information and the second information are used by the network device and the terminal to receive and/or send the user data in an OTFS system. In other words, the terminal may receive the position of the OTFS scheduling unit in the time-frequency domain and the position in the OTFS scheduling unit for carrying the data which are determined by the network device. Optionally, the user data in the OTFS system is data in the DD domain, so during the transmission of the user data in the OTFS system, a data sending end needs to transform the user data from the DD domain to the time-frequency domain, transform the user data from the time-frequency domain to the time domain, and then send the user data. Upon the receipt of the data, a data receiving end needs to transform the received data from the time domain to the time-frequency domain, and then transform the data from the time-frequency domain to the DD domain to obtain the user data. Hence, in some embodiments of the present disclosure, the network device sends at least one of the first information or the second information to the terminal, the first information is used to determine a corresponding time-frequency position after the OTFS scheduling unit carrying the user data is transformed to be in the time-frequency domain, and the second information is used to determine the positions in the OTFS scheduling unit for carrying the user data. In a case that the user data is transmitted between the network device and the terminal, the data sending end in the network device and the terminal carries the user data in the OTFS scheduling unit based on the second information, i.e., carries the user data at the position indicated in the second information, transforms the OTFS scheduling unit carrying the user data to be in the time-frequency domain, then transforms the user data from the time-frequency domain to the time domain, and then sends the data to the data receiving end. Upon the receipt of the data, the data receiving end transforms the received data from the time domain to the time-frequency domain, determines a corresponding position of the OTFS scheduling unit carrying the user data in the time-frequency domain based on the first information, then transforms the corresponding time-frequency domain position of the OTFS scheduling unit carrying the user data from the time-frequency domain to the DD domain to obtain the OTFS scheduling unit, and then determines the position for carrying the user data in the OTFS scheduling unit based on the second information, so as to send and receive the user data in the OTFS system. Based on the above, the present disclosure provides in some embodiments an indication method for indicating a resource position for carrying the user data in the OTFS system, so as to send and/or receive the user data successfully in the OTFS system.

Optionally, FIG. 2A1 is a schematic view showing a transformation between the DD domain and the time-frequency domain according to an embodiment of the present disclosure. As shown in FIG. 2A1, the user data is transformed form the DD domain to the time-frequency domain based on inverse symplectic finite Fourier transform (ISFFT), and transformed from the time-frequency domain to the DD domain based on symplectic finite Fourier transform (SFFT).

How to indicate, via the first information, the position of the OTFS scheduling unit in the time-frequency domain will be described hereinafter.

Optionally, in some embodiments of the present disclosure, the first information includes at least one of: a first indication; or a second indication. The first indication is used to indicate a first time-domain position of the OTFS scheduling unit, and the second indication is used to indicate a first frequency-domain position of the OTFS scheduling unit.

Optionally, the first time-domain position may be understood, for example, as a time-domain position of the OTFS scheduling unit in the time-frequency domain, mapped from the DD domain, and the first frequency-domain position may be understood, for example, as a frequency-domain position of the OTFS scheduling unit in the time-frequency domain, mapped from the DD domain.

Optionally, in some embodiments of the present disclosure, the first indication is used to indicate at least two of a start position, a length or an end position of the first time-domain position; and/or the second indication is used to indicate at least two of a start position, a length or an end position of the first frequency-domain position.

Optionally, indication granularity of the first indication is at least one slot; and indication granularity of the second indication is at least one subband. Optionally, the slot includes L consecutive symbols in the time domain, and the subband includes K consecutive subcarriers in the frequency domain, where L and K are both positive integers.

For example, in some embodiments of the present disclosure, in a case that the indication granularity of the first indication is one slot and the indication granularity of the second indication is one subband, the first indication is used to indicate at least two of a start slot position, a slot length or an end slot position of the first time-domain position, and the second indication is used to indicate at least two of a start subband position, a subband length or an end subband position of the first frequency-domain position. In other words, a third one of the start position, the length and the end position may be determined as long as two of them are determined, so as to determine the position of the slot and/or subband.

Optionally, in some embodiments of the present disclosure, in a case that the indication granularity of the first indication is a plurality of slots, the plurality of slots is divided into one slot group, and the indication is performed with the slot group as granularity. In a case that the indication granularity of the second indication is a plurality of subbands, the plurality of subbands is divided into one subband group, and the indication is performed with the subband group as granularity.

For example, presumed that the indication granularity of the first indication is G slots and the indication granularity of the second indication is S subbands, where G and S are positive integers greater than 1, slots in the time domain are divided into slot groups each having G slots, and subbands in the frequency domain are divided into subband groups each having S subbands. The first indication is used to indicate at least two of a start slot group position, a slot group length (or the quantity of slot groups) or an end slot group position of the first time-domain position, and the second indication is used to indicate at least two of a start subband group position, a subband group length (or the quantity of subband groups) or an end subband group position of the first frequency-domain position.

Optionally, in some other embodiments of the present disclosure, the first indication includes a first bitmap, each bit in the first bitmap corresponds to a time-domain position, and a bit value carried by a bit in the first bitmap is used to indicate whether the time-domain position corresponding to the bit in the first bitmap is the first time-domain position. For example, in a case that a bit value carried by a bit in the first bitmap is a first value (e.g., 1), it indicates that the time-domain position corresponding to the bit is the first time-domain position, and in a case that a bit value carried by a bit in the first bitmap is a second value (e.g., 0), it indicates that the time-domain position corresponding to the bit is not the first time-domain position. The second indication includes a second bitmap, each bit in the second bitmap corresponds to a frequency-domain position, and a bit value carried by a bit in the second bitmap is used to indicate whether the frequency-domain position corresponding to the bit in the second bitmap is the first frequency-domain position. For example, in a case that a bit value carried by a bit in the second bitmap is a first value (e.g., 1), it indicates that the frequency-domain position corresponding to the bit is the first frequency-domain position, and in a case that a bit value carried by a bit in the second bitmap is a second value (e.g., 0), it indicates that the frequency-domain position corresponding to the bit is not the first frequency-domain position.

Optionally, in some embodiments of the present disclosure, in a case that the indication granularity of the first indication is one slot and the indication granularity of the second indication is one subband, each bit in the first bitmap included in the first indication corresponds to one slot, a bit value carried by a bit in the first bitmap is used to indicate whether the slot corresponding to the bit in the first bitmap is the first time-domain position, each bit in the second bitmap included in the second indication corresponds to one subband, a bit value carried by a bit in the second bitmap is used to indicate whether the subband corresponding to the bit in the second bitmap is the first frequency-domain position.

Optionally, in some embodiments of the present disclosure, in a case that the indication granularity of the first indication is G slots and the indication granularity of the second indication is S subbands, the slots in the time domain are divided into slot groups each having G slots, the subbands in the frequency domain are divided into subband groups each having S subbands, each bit in the first bitmap included in the first indication corresponds to one slot group, a bit value carried by a bit in the first bitmap is used to indicate whether the slot group corresponding to the bit in the first bitmap is the first time-domain position, each bit in the second bitmap included in the second indication corresponds to one subband group, a bit value carried by a bit in the second bitmap is used to indicate whether the subband group corresponding to the bit in the second bitmap is the first frequency-domain position.

Optionally, in yet some other embodiments of the present disclosure, the first indication is used to indicate at least one of a period of the first time-domain position, a start position of the first time-domain position within the period, or a length of the first time-domain position within the period; and/or the second indication is used to indicate at least one of a period of the first frequency-domain position, a start position of the first frequency-domain position within the period, or a length of the first frequency-domain position within the period.

Optionally, in some embodiments of the present disclosure, in a case that the indication granularity of the first indication is one slot and the indication granularity of the second indication is one subband, the first indication is used to indicate at least one of the period of the first time-domain position, a start slot position of the first time-domain position within the period, or a slot length of the first time-domain position within the period, and the second indication is used to indicate at least one of the period of the first frequency-domain position, a start subband position of the first frequency-domain position within the period, or a subband length of the first frequency-domain position within the period.

Optionally, in some embodiments of the present disclosure, in a case that the indication granularity of the first indication is G slots and the indication granularity of the second indication is S subbands, where G and S are both positive integers greater than 1, the slots in the time domain are divided into slot groups each having G slots, the subbands in the frequency domain are divided into subband groups each having S subbands, the first indication is used to indicate at least one of the period of the first time-domain position, a start position of a start slot group of the first time-domain position within the period, or a length of the slot group (or the quantity of slot groups) of the first time-domain position within the period, and the second indication is used to indicate at least one of the period of the first frequency-domain position, a start position of a start subband group of the first frequency-domain position within the period, or a length of the subband group (or the quantity of subband groups) of the first frequency-domain position within the period.

It should be appreciated that, the prerequisite for "the first indication is used to indicate at least one of the period of the first time-domain position, the start position of the first time-domain position within the period, or the length of the first time-domain position within the period, and the second indication is used to indicate at least one of the period of the first frequency-domain position, the start position of the first frequency-domain position within the period, or the length of the first frequency-domain position within the period" is that the positions of the OTFS scheduling unit in the time-frequency domain are periodic. The first time-domain position within each period is determined based on the period of the first time-domain position, the start position of the first time-domain position within the period, and the length of the first time-domain position within the period, and the first frequency-domain position within each period is determined based on the period of the first frequency-domain position, the start position of the first frequency-domain position within the period, and the length of the first frequency-domain position within the period.

For the mode "the first indication is used to indicate at least two of the start position, the length or the end position of the first time-domain position, and the second indication is used to indicate at least two of the start position, the length or the end position of the first frequency-domain position" or "the first indication includes the first bitmap, and the second indication includes the second bitmap", the position of the OTFS scheduling unit in the time-frequency domain may be indicated, not matter whether the positions of the OTFS scheduling unit in the time-frequency domain are periodic or aperiodic.

How to indicate, via the second information, the position in the OTFS scheduling unit for carrying the user data will be described hereinafter.

Optionally, in some embodiments of the present disclosure, the second information includes at least one of: a third indication; or a fourth indication. The third indication is used to indicate a first delay-domain position in the OTFS scheduling unit for carrying the user data, and the fourth indication is used to indicate a first Doppler-domain position in the OTFS scheduling unit for carrying the user data.

Optionally, in some embodiments of the present disclosure, the third indication is used to indicate at least two of a start position, a length or an end position of the first delay-domain position; and/or the fourth indication is used to indicate at least two of a start position, a length or an end position of the first Doppler-domain position.

Optionally, in some embodiments of the present disclosure, indication granularity of the third indication is P OTFS symbols; and indication granularity of the fourth indication is Q OTFS subcarriers, where P and Q are both positive integers. Optionally, P is less than or equal to a total number of OTFS symbols included in the OTFS scheduling unit in the delay domain, and Q is less than or equal to a total number of OTFS subcarriers included in the OTFS scheduling unit in the Doppler domain.

For example, in some embodiments of the present disclosure, in a case that P and Q are both 1, the indication granularity of the third indication is one OTFS symbol, and the indication granularity of the fourth indication is one OTFS subcarrier. At this time, the third indication is used to indicate at least two of a start OTFS symbol position, an OTFS symbol length (or the quantity of OTFS symbols), or an end OTFS symbol position of the first delay-domain position, and the fourth indication is used to indicate at least two of a start OTFS subcarrier position, an OTFS subcarrier length (or the quantity of OTFS subcarriers), or an end OTFS subcarrier position of the first Doppler-domain position.

Optionally, in some embodiments of the present disclosure, in a case that P and Q are both greater than 1, the indication granularity of the third indication is a plurality of OTFS symbols, and the indication granularity of the fourth indication is a plurality of OTFS subcarriers. OTFS symbols in the delay domain are divided into OTFS symbol groups each having P OTFS symbols, and OTFS subcarriers in the Doppler domain are divided into OTFS subcarrier groups each having Q OTFS subcarriers. The third indication is used to indicate at least two of a start OTFS symbol group position, an OTFS symbol group length (or the quantity of OTFS symbol groups), or an end OTFS symbol group position of the first delay-domain position, and the fourth indication is used to indicate at least two of a start OTFS subcarrier group position, an OTFS subcarrier length (or the quantity of OTFS subcarrier groups), or an end OTFS subcarrier group position of the first Doppler-domain position.

Optionally, in some other embodiments of the present disclosure, the third indication includes a third bitmap, each bit in the third bitmap corresponds to a delay-domain position, and a bit value carried by a bit in the third bitmap is used to indicate whether the delay-domain position corresponding to the bit in the third bitmap is the first delay-domain position. For example, in a case that a bit value carried by a bit in the third bitmap is a first value (e.g., 1), it indicates that the delay-domain position corresponding to the bit is the first delay-domain position, and in a case that a bit value carried by a bit in the third bitmap is a second value (e.g., 0), it indicates that the delay-domain position corresponding to the bit is not the first delay-domain position. The fourth indication includes a fourth bitmap, each bit in the fourth bitmap corresponds to a Doppler-domain position, and a bit value carried by a bit in the fourth bitmap is used to indicate whether the Doppler-domain position corresponding to the bit in the fourth bitmap is the first Doppler-domain position. For example, in a case that a bit value carried by a bit in the fourth bitmap is a first value (e.g., 1), it indicates that the Doppler-domain position corresponding to the bit is the first Doppler-domain position, and in a case that a bit value carried by a bit in the fourth bitmap is a second value (e.g., 0), it indicates that the Doppler-domain position corresponding to the bit is not the first Doppler-domain position.

Optionally, in some embodiments of the present disclosure, in a case that P and Q are both 1, the indication granularity of the third indication is one OTFS symbol, and the indication granularity of the fourth indication is one OTFS subcarrier. At this time, each bit in the third bitmap included in the third indication corresponds to one OTFS symbol, a bit value carried by a bit in the third bitmap is used to indicate whether the OTFS symbol corresponding to the bit in the third bitmap is the first delay-domain position, each bit in the fourth bitmap included in the fourth indication corresponds to one OTFS subcarrier, and a bit value carried by a bit in the fourth bitmap is used to indicate whether the OTFS subcarrier corresponding to the bit in the fourth bitmap is the first Doppler-domain position.

Optionally, in some embodiments of the present disclosure, in a case that P and Q are greater than 1, the indication granularity of the third indication is P OTFS symbols, and the indication granularity of the fourth indication is Q OTFS subcarriers. At this time, the OTFS symbols in the delay domain are divided into OTFS symbol groups each having P OTFS symbols, and the OTFS subcarriers in the Doppler domain are divided into OTFS subcarrier groups each having Q OTFS subcarriers, each bit in the third bitmap included in the third indication corresponds to one OTFS symbol group, a bit value carried by a bit in the third bitmap is used to indicate whether the OTFS symbol group corresponding to the bit in the third bitmap is the first delay-domain position, each bit in the fourth bitmap included in the fourth indication corresponds to one OTFS subcarrier group, and a bit value carried by a bit in the fourth bitmap is used to indicate whether the OTFS subcarrier group corresponding to the bit in the fourth bitmap is the first Doppler-domain position.

Optionally, in yet some embodiments of the present disclosure, the third indication is used to indicate at least one of a period of the first delay-domain position, a start position of the first delay-domain position within the period, or a length of the first delay-domain position within the period; and the fourth indication is used to indicate at least one of a period of the first Doppler-domain position, a start position of the first Doppler-domain position within the period, or a length of the first Doppler-domain position within the period.

Optionally, in some embodiments of the present disclosure, in a case that P and Q are both 1, the indication granularity of the third indication is one OTFS symbol, and the indication granularity of the fourth indication is one OTFS subcarrier. At this time, the third indication is used to indicate at least one of the period of the first delay-domain position, a start OTFS symbol position of the first delay-domain position within the period, or an OTFS symbol length of the first delay-domain position within the period; and the fourth indication is used to indicate at least one of the period of the first Doppler-domain position, a start OTFS subcarrier position of the first Doppler-domain position within the period, or an OTFS subcarrier length of the first Doppler-domain position within the period.

Optionally, in some embodiments of the present disclosure, in a case that P and Q are greater than 1, the indication granularity of the third indication is P OTFS symbols, and the indication granularity of the fourth indication is Q OTFS subcarriers. At this time, the OTFS symbols in the delay domain are divided into OTFS symbol groups each having P OTFS symbols, and the OTFS subcarriers in the Doppler domain are divided into OTFS subcarrier groups each having Q OTFS subcarriers. The third indication is used to indicate at least one of the period of the first delay-domain position, a start OTFS symbol group position of the first delay-domain position within the period, or an OTFS symbol group length of the first delay-domain position within the period; and the fourth indication is used to indicate at least one of the period of the first Doppler-domain position, a start OTFS subcarrier group position of the first Doppler-domain position within the period, or an OTFS subcarrier group length of the first Doppler-domain position within the period.

It should be appreciated that, the prerequisite for "the third indication is used to indicate at least one of the period of the first delay-domain position, the start position of the first delay-domain position within the period, or the length of the first delay-domain position within the period, and the fourth indication is used to indicate at least one of the period of the first Doppler-domain position, the start position of the first Doppler-domain position within the period, or the length of the first Doppler-domain position within the period" is that the positions of the OTFS scheduling unit in the time-frequency domain are periodic. The first delay-domain position within each period is determined based on the period of the first delay-domain position, the start position of the first delay-domain position within the period, and the length of the first delay-domain position within the period, and the first Doppler-domain position within each period is determined based on the period of the first Doppler-domain position, the start position of the first Doppler-domain position within the period, and the length of the first Doppler-domain position within the period.

For the mode "the third indication is used to indicate at least two of the start position, the length or the end position of the first delay-domain position, and the fourth indication is used to indicate at least two of the start position, the length or the end position of the first Doppler-domain position" or "the third indication includes the third bitmap, and the fourth indication includes the fourth bitmap", the position of the OTFS scheduling unit in the time-frequency domain may be indicated, not matter whether the positions of the OTFS scheduling unit in the time-frequency domain are periodic or aperiodic.

**Step 2102:** the network device sends the user data in the OTFS system based on at least one of the first information or the second information.

Optionally, in some embodiments of the present disclosure, the sending, by the network device, the user data in the OTFS system based on at least one of the first information or the second information includes: carrying the user data in the OTFS scheduling unit based on the second information, i.e., carrying the user data at a position indicated in the second information, transforming the OTFS scheduling unit carrying the user data to be in the time-frequency domain based on the first information, then transforming the user data from the time-frequency domain to the time domain, and then sending the user data.

Optionally, in some embodiments of the present disclosure, the network device sends the user data to the terminal based on at least one of the first information or the second information.

Optionally, in some embodiments of the present disclosure, the terminal receives the user data in the OTFS system based on at least one of the first information or the second information. Optionally, a method for receiving, by the terminal, the user data in the OTFS system based on at least one of the first information or the second information includes the following steps. Upon the receipt of the data, the terminal transforms the received data from the time domain to the time-frequency domain, determines the position of the OTFS scheduling unit carrying the user data in the time-frequency domain based on the first information, transforms the time-frequency domain position of the OTFS scheduling unit carrying the user data from the time-frequency domain to the DD domain to obtain the OTFS scheduling unit, and then determine the position in the OTFS scheduling unit for carrying the user data based on the second information, so as to receive the data.

The indication method involved in the embodiments of the present disclosure includes at least one of Steps S2101 and S2102. For example, Step S2101 may be implemented as an independent embodiment, Step S2101 may be implemented as an independent embodiment, but the present disclosure is not limited thereto.

In the implementation or embodiment of the present disclosure, in a case of no conflict, the steps may be performed independently, in combination, or in different orders, and optional implementations or embodiments may be combined in any way, or combined with any steps in the other implementations or embodiments.

FIG. 2B is a schematic view showing an interaction of an indication method according to an embodiment of the present disclosure. As shown in FIG. 2B, the indication method involved in the embodiments of the present disclosure is applied to the communication system 100, and includes the following steps.

**Step 2201:** a network device sends at least one of first information or second information.

**Step 2201:** a terminal sends user data in an OTFS system based on at least one of the first information or the second information.

Optionally, in some embodiments of the present disclosure, the terminal sends the user data to the network device in the OTFS system based on at least one of the first information or the second information.

Optionally, in some embodiments of the present disclosure, the network device receives the user data in the OTFS system based on at least one of the first information or the second information.

The detailed description about Steps 2201 and 2202 may refer to that in the above embodiments.

The indication method involved in the embodiments of the present disclosure may include at least one of Step S2201 or Step S2202. For example, Step S2201 may be implemented as an independent embodiment, Step S2202 may be implemented as an independent embodiment, but the present disclosure is not limited thereto.

In the implementation or embodiment of the present disclosure, in a case of no conflict, the steps may be performed independently, in combination, or in different orders, and optional implementations or embodiments may be combined in any way, or combined with any steps in the other implementations or embodiments.

FIG. 3A is a schematic view showing an interaction of an indication method according to an embodiment of the present disclosure. As shown in FIG. 3A, the indication method involved in the embodiments of the present disclosure is applied to a network device 101, and includes the following steps.

**Step 3101:** the network device sends at least one of first information or second information.

**Step 3102:** the network device sends user data in an OTFS system based on at least one of the first information or the second information.

The detailed description about Steps 3101 and 3102 may refer to that in the above embodiments.

The indication method involved in the embodiments of the present disclosure may include at least one of Step S3101 or Step S3102. For example, Step S3101 may be implemented as an independent embodiment, Step S3102 may be implemented as an independent embodiment, but the present disclosure is not limited thereto.

In the implementation or embodiment of the present disclosure, in a case of no conflict, the steps may be performed independently, in combination, or in different orders, and optional implementations or embodiments may be combined in any way, or combined with any steps in the other implementations or embodiments.

FIG. 3B is a schematic view showing an interaction of an indication method according to an embodiment of the present disclosure. As shown in FIG. 3B, the indication method involved in the embodiments of the present disclosure is applied to a network device 101, and includes the following steps.

**Step 3201:** the network device sends at least one of first information or second information.

**Step 3202:** the network device receives user data in the OTFS system according to at least one of the first information or the second information.

The detailed description about Steps 3201 and 3202 may refer to that in the above embodiments.

The indication method involved in the embodiments of the present disclosure may include at least one of Step S3201 or Step S3202. For example, Step S3201 may be implemented as an independent embodiment, Step S3202 may be implemented as an independent embodiment, but the present disclosure is not limited thereto.

In the implementation or embodiment of the present disclosure, in a case of no conflict, the steps may be performed independently, in combination, or in different orders, and optional implementations or embodiments may be combined in any way, or combined with any steps in the other implementations or embodiments.

FIG. 3C is a schematic view showing an interaction of an indication method according to an embodiment of the present disclosure. As shown in FIG. 3C, the indication method involved in the embodiments of the present disclosure is applied to a network device 101, and includes the following step.

**Step 3301:** the network device sends at least one of first information or second information.

Optionally, the OTFS scheduling unit includes at least one OTFS symbol in a delay domain and at least one OTFS subcarrier in a Doppler domain.

Optionally, the first information includes at least one of: a first indication; or a second indication. The first indication is used to indicate a first time-domain position of the OTFS scheduling unit, and the second indication is used to indicate a first frequency-domain position of the OTFS scheduling unit.

Optionally, the first indication is used to indicate at least two of a start position, a length or an end position of the first time-domain position; and the second indication is used to indicate at least two of a start position, a length or an end position of the first frequency-domain position.

Optionally, the first indication includes a first bitmap, each bit in the first bitmap corresponds to a time-domain position, and a bit value carried by a bit in the first bitmap is used to indicate whether the time-domain position corresponding to the bit in the first bitmap is the first time-domain position; and the second indication includes a second bitmap, each bit in the second bitmap corresponds to a frequency-domain position, and a bit value carried by a bit in the second bitmap is used to indicate whether the frequency-domain position corresponding to the bit in the second bitmap is the first frequency-domain position.

Optionally, the first indication is used to indicate at least one of a period of the first time-domain position, a start position of the first time-domain position within the period, or a length of the first time-domain position within the period; and the second indication is used to indicate at least one of a period of the first frequency-domain position, a start position of the first frequency-domain position within the period, or a length of the first frequency-domain position within the period.

Optionally, indication granularity of the first indication is at least one slot; and indication granularity of the second indication is at least one subband.

Optionally, the slot includes L consecutive symbols in a time domain, and the subband includes K consecutive subcarriers in a frequency domain, where L and K are both positive integers.

Optionally, the second information includes at least one of: a third indication; or a fourth indication. The third indication is used to indicate a first delay-domain position in the OTFS scheduling unit for carrying the user data, and the fourth indication is used to indicate a first Doppler-domain position in the OTFS scheduling unit for carrying the user data.

Optionally, the third indication is used to indicate at least two of a start position, a length or an end position of the first delay-domain position; and the fourth indication is used to indicate at least two of a start position, a length or an end position of the first Doppler-domain position.

Optionally, the third indication includes a third bitmap, each bit in the third bitmap corresponds to a delay-domain position, and a bit value carried by a bit in the third bitmap is used to indicate whether the delay-domain position corresponding to the bit in the third bitmap is the first delay-domain position; and the fourth indication includes a fourth bitmap, each bit in the fourth bitmap corresponds to a Doppler-domain position, and a bit value carried by a bit in the fourth bitmap is used to indicate whether the Doppler-domain position corresponding to the bit in the fourth bitmap is the first Doppler-domain position.

Optionally, the third indication is used to indicate at least one of a period of the first delay-domain position, a start position of the first delay-domain position within the period, or a length of the first delay-domain position within the period; and the fourth indication is used to indicate at least one of a period of the first Doppler-domain position, a start position of the first Doppler-domain position within the period, or a length of the first Doppler-domain position within the period.

Optionally, indication granularity of the third indication is P OTFS symbols; and indication granularity of the fourth indication is Q OTFS subcarriers, where P and Q are both positive integers.

Optionally, P is less than or equal to a total number of OTFS symbols included in the OTFS scheduling unit in the delay domain, and Q is less than or equal to a total number of OTFS subcarriers included in the OTFS scheduling unit in the Doppler domain.

Optionally, the indication method further includes at least one of: sending, by the network device, the user data in the OTFS system based on at least one of the first information or the second information; or receiving, by the network device, the user data in the OTFS system based on at least one of the first information or the second information.

The detailed description about Step 3301 may refer to that in the above embodiments.

In the implementation or embodiment of the present disclosure, in a case of no conflict, the steps may be performed independently, in combination, or in different orders, and optional implementations or embodiments may be combined in any way, or combined with any steps in the other implementations or embodiments.

FIG. 4A is a schematic view showing an interaction of an indication method according to an embodiment of the present disclosure. As shown in FIG. 4A, the indication method involved in the embodiments of the present disclosure is applied to a terminal 102, and includes the following steps.

**Step 4101:** the terminal receives at least one of first information or second information.

**Step 4102:** the terminal receives user data in an OTFS system based on at least one of the first information or the second information.

The detailed description about Steps 4101 and 4102 may refer to that in the above embodiments.

The indication method involved in the embodiments of the present disclosure may include at least one of Step S4101 or Step S4102. For example, Step S4101 may be implemented as an independent embodiment, Step S4102 may be implemented as an independent embodiment, but the present disclosure is not limited thereto.

In the implementation or embodiment of the present disclosure, in a case of no conflict, the steps may be performed independently, in combination, or in different orders, and optional implementations or embodiments may be combined in any way, or combined with any steps in the other implementations or embodiments.

FIG. 4B is a schematic view showing an interaction of an indication method according to an embodiment of the present disclosure. As shown in FIG. 4B, the indication method involved in the embodiments of the present disclosure is applied to a terminal 102, and includes the following steps.

**Step 4201:** the terminal receives at least one of first information or second information.

**Step 4202:** the terminal sends user data in an OTFS system based on at least one of the first information or the second information.

The detailed description about Steps 4201 and 4202 may refer to that in the above embodiments.

The indication method involved in the embodiments of the present disclosure may include at least one of Step S4201 or Step S4202. For example, Step S4201 may be implemented as an independent embodiment, Step S4202 may be implemented as an independent embodiment, but the present disclosure is not limited thereto.

In the implementation or embodiment of the present disclosure, in a case of no conflict, the steps may be performed independently, in combination, or in different orders, and optional implementations or embodiments may be combined in any way, or combined with any steps in the other implementations or embodiments.

FIG. 4C is a schematic view showing an interaction of an indication method according to an embodiment of the present disclosure. As shown in FIG. 4C, the indication method involved in the embodiments of the present disclosure is applied to a terminal 102, and includes the following step.

**Step 4301:** the terminal receives at least one of first information or second information.

Optionally, the OTFS scheduling unit includes at least one OTFS symbol in a delay domain and at least one OTFS subcarrier in a Doppler domain.

Optionally, the first information includes at least one of: a first indication; or a second indication. The first indication is used to indicate a first time-domain position of the OTFS scheduling unit, and the second indication is used to indicate a first frequency-domain position of the OTFS scheduling unit.

Optionally, the first indication is used to indicate at least two of a start position, a length or an end position of the first time-domain position; and/or the second indication is used to indicate at least two of a start position, a length or an end position of the first frequency-domain position.

Optionally, the first indication includes a first bitmap, each bit in the first bitmap corresponds to a time-domain position, and a bit value carried by a bit in the first bitmap is used to indicate whether the time-domain position corresponding to the bit in the first bitmap is the first time-domain position; and the second indication includes a second bitmap, each bit in the second bitmap corresponds to a frequency-domain position, and a bit value carried by a bit in the second bitmap is used to indicate whether the frequency-domain position corresponding to the bit in the second bitmap is the first frequency-domain position.

Optionally, the first indication is used to indicate at least one of a period of the first time-domain position, a start position of the first time-domain position within the period, or a length of the first time-domain position within the period; and the second indication is used to indicate at least one of a period of the first frequency-domain position, a start position of the first frequency-domain position within the period, or a length of the first frequency-domain position within the period.

Optionally, indication granularity of the first indication is at least one slot; and indication granularity of the second indication is at least one subband.

Optionally, the slot includes L consecutive symbols in a time domain, and the subband includes K consecutive subcarriers in a frequency domain, where L and K are both positive integers.

Optionally, the second information includes at least one of: a third indication; or a fourth indication. The third indication is used to indicate a first delay-domain position in the OTFS scheduling unit for carrying the user data, and the fourth indication is used to indicate a first Doppler-domain position in the OTFS scheduling unit for carrying the user data.

Optionally, the third indication is used to indicate at least two of a start position, a length or an end position of the first delay-domain position; and the fourth indication is used to indicate at least two of a start position, a length or an end position of the first Doppler-domain position.

Optionally, the third indication includes a third bitmap, each bit in the third bitmap corresponds to a delay-domain position, and a bit value carried by a bit in the third bitmap is used to indicate whether the delay-domain position corresponding to the bit in the third bitmap is the first delay-domain position; and the fourth indication includes a fourth bitmap, each bit in the fourth bitmap corresponds to a Doppler-domain position, and a bit value carried by a bit in the fourth bitmap is used to indicate whether the Doppler-domain position corresponding to the bit in the fourth bitmap is the first Doppler-domain position.

Optionally, the third indication is used to indicate at least one of a period of the first delay-domain position, a start position of the first delay-domain position within the period, or a length of the first delay-domain position within the period; and the fourth indication is used to indicate at least one of a period of the first Doppler-domain position, a start position of the first Doppler-domain position within the period, or a length of the first Doppler-domain position within the period.

Optionally, indication granularity of the third indication is P OTFS symbols; and indication granularity of the fourth indication is Q OTFS subcarriers, where P and Q are both positive integers.

Optionally, P is less than or equal to a total number of OTFS symbols included in the OTFS scheduling unit in the delay domain, and Q is less than or equal to a total number of OTFS subcarriers included in the OTFS scheduling unit in the Doppler domain.

Optionally, the indication method further includes at least one of: receiving, by the terminal, the user data in the OTFS system based on at least one of the first information or the second information; or sending, by the terminal, the user data in the OTFS system based on at least one of the first information or the second information.

The detailed description about Step 4301 may refer to that in the above embodiments.

In the implementation or embodiment of the present disclosure, in a case of no conflict, the steps may be performed independently, in combination, or in different orders, and optional implementations or embodiments may be combined in any way, or combined with any steps in the other implementations or embodiments.

FIG. 5 is a flow chart of an indication method according to an embodiment of the present disclosure. As shown in FIG. 5, the indication method involved in the embodiments of the present disclosure is applied to a communication system, and includes at least one of the following steps.

**Step 5101:** a network device sends at least one of first information or second information.

**Step 5102:** a terminal receives at least one of the first information or the second information.

Optional implementations of Steps 5101 and 5102 may refer to those in the above embodiments.

In some embodiments of the present disclosure, the indication method includes the above-mentioned method at a communication system side, a network device side or a terminal side, which will not be particularly defined herein.

The indication method involved in the embodiments of the present disclosure may include at least one of Step S5101 or Step S5102. For example, Step S5101 may be implemented as an independent embodiment, Step S5102 may be implemented as an independent embodiment, but the present disclosure is not limited thereto.

In the implementation or embodiment of the present disclosure, in a case of no conflict, the steps may be performed independently, in combination, or in different orders, and optional implementations or embodiments may be combined in any way, or combined with any steps in the other implementations or embodiments.

The indication method will be described illustratively hereinafter.

### 1. Network device

(1). An OTFS scheduling unit (a two-dimensional grid scheduled by OTFS) is determined, and relevant parameters includes any one of: a. in a DD domain, a symbol spacing 1/(*M*Δ*f*) in a delay domain direction, and a spacing 1/(*NT*) in a Doppler shift direction.
(2). A time-domain position and a frequency-domain position of the OTFS scheduling unit are indicated.

Indication granularity in a time-frequency domain is defined. The indication granularity includes slot in the time domain and subband in the frequency domain. The slot refers to a consecutive time period and it corresponds to L symbols in the time domain. The subband refers to consecutive frequency-domain resources and it corresponds to K subcarriers.
a. Time-domain position indication information includes the following modes.
   i. Consecutive indication mode: a start position and a length are indicated, and the indication granularity is slot.
      In addition, the slots may be divided into slot groups each having *Nₛₗₒₜ* slots. A start position and a length of the slot group are indicated, and the indication granularity is one slot group.
   ii. Bitmap mode: the slots in the time domain correspond to a bit string, and in a case that a bit value of a bit is a first value, it indicates that the slot is assigned. In addition, the slots may be divided into slot groups, and a bit value corresponds to, and indicates, one slot group.
   iii. Periodic indication mode: the indication information includes a period, a start position within the period, i.e., an offset value within the period, and a length within the period. In addition, the slots may be divided into slot groups, and the indication granularity is one slot group.
b. Frequency-domain position indication information

The above-mentioned mode for "time-domain position indication information" is used, with the indicated content being replaced with "subband".

### (3). A position in the OTFS scheduling unit for user data is indicated.

The position in the OTFS scheduling unit for the user data in the DD domain is indicated.
a. In the delay domain, the indication granularity is P consecutive OTFS symbols, and in the Doppler domain, the indication granularity is Q consecutive OTFS subcarriers, where P and Q are positive integers.
b. Position indication information in the delay domain in the OTFS scheduling unit
   i. Consecutive indication mode: a start position and a length are indicated, and the indication granularity is P OTFS symbols.
   ii. Bitmap mode: the OTFS symbols in the time domain correspond to a bit string, and in a case that a bit value of a bit is a first value, it indicates that the P OTFS symbols are assigned.
   iii. Periodic indication mode: the indication granularity is P OTFS symbols, and the indication information includes a period, a start position within the period, i.e., an offset value within the period, and a length within the period.
c. In the OTFS scheduling unit, the above-mentioned description about b is also applied to the position indication information in the Doppler domain, with the indicated content being replaced with "Q OTFS subcarriers".

### 2. Terminal device

In a case that the network device determines the indication information for indicating the time-domain position and the frequency-domain position of the OTFS scheduling unit and the position in the OTFS scheduling unit for the user data in the DD domain, the network device performs a sending operation to send the determined indication information, and the terminal device performs a reverse operation, i.e., receives the indication information.

The present disclosure further provides in some embodiments an apparatus for implementing any of the above-mentioned indication methods. For example, the present disclosure provides an apparatus which includes units or modules for implementing the steps of the indication method for the terminal. For another example, the present disclosure provides an apparatus which includes units or modules for implementing the steps of the indication method for the network device (e.g., an access network device, a core network function node, or a core network device).

It should be appreciated that, the above units or modules in the apparatus are divided merely on the basis of their logic functions, and in actual use, they may be completely or partially integrated into a physical entity, or physically separated from each other. These units or modules may be implemented by calling software through a processor. For example, the apparatus includes the processor, the processor is coupled to a memory, an instruction is stored in the memory, and the processor calls the instruction in the memory to implement any of the above-mentioned indication methods or achieve the functions of the units or modules in the apparatus. For example, the processor is a general-purpose processor, e.g., a central processing unit (CPU) or a micro-processor, and the memory is a memory inside or outside the apparatus. Alternatively, the units or modules in the apparatus may be implemented in the form of hardware circuit. The hardware circuit is designed to achieve the functions of part of, or all of, the units or modules, and the hardware circuit may be understood as one or more processors. For example, in one implementation, the hardware circuit is an application-specific integrated circuit (ASIC), and a logical relationship among elements in the circuit is designed to achieve the functions of part of, or all of, the units or modules. For another example, in another implementation, the hardware circuit is implemented via a programmable logic device (PLD). Taking a field programmable gate array (FPGA) as an example, it includes a large amount of logic gate circuits, and a connection relationship among the logic gate circuits is configured through a configuration file, so as to achieve the functions of part of, or all of, the units or modules. All the units or modules in the apparatus may be implemented in the form of calling software by the processor, or implemented in the form of hardware circuits, or part of the units or modules may be implemented in the form of calling software by the processor and the remaining units or modules may be implemented in the form of hardware circuits.

In the embodiments of the present disclosure, the processor is a circuit having a signal processing capability. In one implementation, the processor is a circuit having a capability of reading and executing an instruction, e.g., a CPU, a microprocessor, a graphics processing unit (GPU, which may also be understood as a microprocess), or a digital signal processor (DSP). In another implementation, the processor achieves a certain function via a logic relationship of the hardware circuit, and the logic relationship of the hardware circuit is fixed or reconstructable. For example, the processor is a hardware circuit implemented via an ASIC or a PLD, e.g., FPGA. In the reconstructable hardware circuit is loaded with a configuration document to implement the configuration of the hardware circuit, i.e., the processor is loaded with an instruction to implement the functions of part of, or all of, the units or modules. In addition, the processor may also be a hardware circuit designed for artificial intelligence, and it may be understood as an ASIC, e.g., a neural network processing unit (NPU), or a tensor processing unit (TPU), a deep learning processing unit (DPU).

FIG. 6A is a schematic view showing a first indication apparatus according to an embodiment of the present disclosure. As shown in FIG. 6A, the first indication apparatus includes a sending module. The sending module is configured to send at least one of first information or second information. The first information is used to indicate a position of an OTFS scheduling unit in a time-frequency domain, and the second information is used to indicate a position in the OTFS scheduling unit for carrying user data. Optionally, the sending module is configured to perform the steps related to "sending" in any of the above-mentioned indication methods for the network device 101. Optionally, the first indication apparatus further includes at least one of a reception module or a processing module. The reception module is configured to perform the steps related to "receiving" in any of the above-mentioned indication methods for the network device 101, and the processing module is configured to perform the steps related to "processing" in any of the above-mentioned indication methods for the network device 101, which will not be particularly defined herein.

FIG. 6B is a schematic view showing a second indication apparatus according to an embodiment of the present disclosure. As shown in FIG. 6B, the second indication apparatus includes a reception module. The reception module is configured to receive at least one of first information or second information. The first information is used to indicate a position of an OTFS scheduling unit in a time-frequency domain, and the second information is used to indicate a position in the OTFS scheduling unit for carrying user data. Optionally, the reception module is configured to perform the steps related to "receiving" in any of the above-mentioned indication methods for the terminal 102. Optionally, the second indication apparatus further includes at least one of a processing module or a sending module. The processing module is configured to perform the steps related to "processing" in any of the above-mentioned indication methods for the terminal 102, and the sending module is configured to perform the steps related to "sending" in any of the above-mentioned indication methods for the terminal 102, which will not be particularly defined herein.

FIG. 7A is a schematic view showing a communication device 7100 according to an embodiment of the present disclosure. The communication device 7100 is a network device (e.g., an access network device or a core network device), a terminal (e.g., a UE), a chip, a chip system or a processor for supporting the network device to implement any of the above-mentioned indication methods, or a chip, a chip system or a processor for supporting the terminal to implement any of the above-mentioned indication methods. The communication device 7100 is configured to implement the indication methods described in the above-mentioned method embodiments, which may refer to the description in the above-mentioned method embodiments.

As shown in FIG. 7A, the communication device 7100 includes one or more processors 7101. The one or more processors 7101 may be a general-purpose processor or special-purpose processor, e.g., a baseband processor or a central processing unit. The baseband processor is configured to process a communication protocol as well as communication data, and the central processing unit is configured to control the indication apparatus (e.g., a base station, a baseband chip, a terminal device, a terminal device chip, a DU or a CU), execute a program, and process data in the program. The processor 7101 is configured to call an instruction to enable the communication device 7100 to implement any of the above-mentioned indication methods.

In some embodiments of the present disclosure, the communication device 7100 further includes one or more memories 7102 storing therein an instruction. Optionally, all of, or part of, the memories 7102 may also be arranged outside the communication device 7100.

In some embodiments of the present disclosure, the communication device 7100 further includes one or more transceivers 7103. In a case that the communication device 7100 includes the one or more transceivers 7103, the communication steps in the above-mentioned methods, e.g., the sending steps and the receiving steps, are executed by the transceiver 7103, and the other steps are executed by the processor 7101.

In some embodiments of the present disclosure, the transceiver includes a receiver and a transmitter. The receiver is separated from, or integrated with, the transmitter. Optionally, such terms as transceiver, transceiver unit, transceiver machine and transceiver circuit may be replaced with each other, such terms as transmitter, transmission unit, transmission machine and transmission circuit may be replaced with each other, and such terms as receiver, reception unit, reception machine and reception circuit may be replaced with each other.

Optionally, the communication device 7100 further includes one or more interface circuits 7104, and the one or more interface circuits 7104 are coupled to the memory 7102. The interface circuit 7104 is configured to receive a signal from the memory 7102 or the other apparatus, and/or send a signal to the memory 7102 or the other apparatus. For example, the interface circuit 7104 is configured to read an instruction stored in the memory 7102, and send the instruction to the processor 7101.

The communication device 7100 described in the above embodiments of the present disclosure is a network device or a terminal, but a scope of the communication device 7100 is not limited thereto. The structure of the communication device 7100 is not limited to that in FIG. 7A. The communication device may be an independent device or a part of a large device. For example, the communication device may be: (1) an independent integrated circuit (IC), chip, chip system or chip sub-system; (2) a set of one or more ICs (optionally, the IC set also includes a memory member for storing therein data and a computer program); (3) an ASIC, e.g., Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

FIG. 7B is a schematic view showing a chip 7200 according to an embodiment of the present disclosure. In a case that the communication device 7100 is a chip or a chip system, the structure may refer to the chip 7200 in FIG. 7B, but the present disclosure is not limited thereto.

The chip 7200 includes one or more processors 7201, and the processor 7201 is configured to call an instruction to enable the chip 7200 to implement any of the above-mentioned indication methods.

In some embodiments of the present disclosure, the chip 7200 further includes one or more interface circuits 7202. The interface circuit 7202 is coupled to a memory 7203, and configured to receive a signal from the memory 7203 or the other apparatus, and/or send a signal to the memory 7203 or the other apparatus. For example, the interface circuit 7202 is configured to read an instruction stored in the memory 7203, and send the instruction to the processor 7201. Optionally, such terms as interface circuit, interface, transceiver pin and transceiver may be replaced with each other.

In some embodiments of the present disclosure, the chip 7200 further includes one or more memories 7203 storing therein an instruction. Optionally, all of or part of the memories 7203 may be arranged outside the chip 7200.

The present disclosure further provides in some embodiments a storage medium storing therein an instruction. In a case that the instruction is executed by the communication device 7100, the communication device 7100 implements any of the above-mentioned indication methods. Optionally, the storage medium is an electronic storage medium. Optionally, the storage medium is, but not limited to, a computer-readable storage medium, and it may also be any other apparatus-readable storage medium. Optionally, the storage medium is, but not limited to, a non-transitory storage medium, and it may also be a transitory storage medium.

The present disclosure further provides in some embodiments a program product. In a case that the program product is executed by the communication device 7100, the communication device 7100 implements any of the above-mentioned indication methods. Optionally, the program product is a computer program product.

The present disclosure further provides in some embodiments a computer program. In a case that the computer program is executed by a computer, the computer implements any of the above-mentioned indication methods.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. In a case that the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, units and algorithm steps for instances described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, apparatus and units described hereinabove may refer to the corresponding procedures in the method embodiments, and thus will not be particularly defined herein.

The above embodiments are merely for illustrative purposes, but shall not be construed as limiting the scope of the present disclosure. Any person skilled in the art may make modifications and substitutions without departing from the spirit of the present disclosure, and these modifications and substitutions shall also fall within the scope of the present disclosure. Hence, the scope of the present disclosure shall be subject to the scope defined by the appended claims.

## Claims

1. An indication method, comprising:
sending, by a network device, at least one of first information or second information, wherein the first information is used to indicate a position of an orthogonal time frequency and space (OTFS) scheduling unit in a time-frequency domain, and the second information is used to indicate a position in the OTFS scheduling unit for carrying user data.

2. The indication method according to claim 1, wherein the OTFS scheduling unit comprises at least one OTFS symbol in a delay domain and at least one OTFS subcarrier in a Doppler domain.

3. The indication method according to claim 1 or 2, wherein the first information comprises at least one of:
a first indication, wherein the first indication is used to indicate a first time-domain position of the OTFS scheduling unit; or
a second indication, wherein the second indication is used to indicate a first frequency-domain position of the OTFS scheduling unit.

4. The indication method according to claim 3, wherein
the first indication is used to indicate at least two of a start position, a length or an end position of the first time-domain position; and/or
the second indication is used to indicate at least two of a start position, a length or an end position of the first frequency-domain position.

5. The indication method according to claim 3, wherein the first indication comprises a first bitmap, each bit in the first bitmap corresponds to a time-domain position, and a bit value carried by a bit in the first bitmap is used to indicate whether the time-domain position corresponding to the bit in the first bitmap is the first time-domain position; and/or
the second indication comprises a second bitmap, each bit in the second bitmap corresponds to a frequency-domain position, and a bit value carried by a bit in the second bitmap is used to indicate whether the frequency-domain position corresponding to the bit in the second bitmap is the first frequency-domain position.

6. The indication method according to claim 3, wherein the first indication is used to indicate at least one of a period of the first time-domain position, a start position of the first time-domain position within the period, or a length of the first time-domain position within the period; and/or
the second indication is used to indicate at least one of a period of the first frequency-domain position, a start position of the first frequency-domain position within the period, or a length of the first frequency-domain position within the period.

7. The indication method according to any one of claims 3 to 6, wherein indication granularity of the first indication is at least one slot; and indication granularity of the second indication is at least one subband.

8. The indication method according to claim 7, wherein the slot comprises L consecutive symbols in a time domain, and the subband comprises K consecutive subcarriers in a frequency domain, where L and K are both positive integers.

9. The indication method according to any one of claims 1 to 8, wherein the second information comprises at least one of:
a third indication, wherein the third indication is used to indicate a first delay-domain position in the OTFS scheduling unit for carrying the user data; or
a fourth indication, wherein the fourth indication is used to indicate a first Doppler-domain position in the OTFS scheduling unit for carrying the user data.

10. The indication method according to claim 9, wherein the third indication is used to indicate at least two of a start position, a length or an end position of the first delay-domain position; and/or
the fourth indication is used to indicate at least two of a start position, a length or an end position of the first Doppler-domain position.

11. The indication method according to claim 10, wherein the third indication comprises a third bitmap, each bit in the third bitmap corresponds to a delay-domain position, and a bit value carried by a bit in the third bitmap is used to indicate whether the delay-domain position corresponding to the bit in the third bitmap is the first delay-domain position; and/or
the fourth indication comprises a fourth bitmap, each bit in the fourth bitmap corresponds to a Doppler-domain position, and a bit value carried by a bit in the fourth bitmap is used to indicate whether the Doppler-domain position corresponding to the bit in the fourth bitmap is the first Doppler-domain position.

12. The indication method according to claim 9, wherein the third indication is used to indicate at least one of a period of the first delay-domain position, a start position of the first delay-domain position within the period, or a length of the first delay-domain position within the period; and/or
the fourth indication is used to indicate at least one of a period of the first Doppler-domain position, a start position of the first Doppler-domain position within the period, or a length of the first Doppler-domain position within the period.

13. The indication method according to any one of claims 9 to 12, wherein indication granularity of the third indication is P OTFS symbols; and indication granularity of the fourth indication is Q OTFS subcarriers, where P and Q are both positive integers.

14. The indication method according to claim 13, wherein P is less than or equal to a total number of OTFS symbols comprised in the OTFS scheduling unit in the delay domain, and Q is less than or equal to a total number of OTFS subcarriers comprised in the OTFS scheduling unit in the Doppler domain.

15. The indication method according to any one of claims 1 to **14,** further comprising at least one of:
sending, by the network device, the user data in an OTFS system based on at least one of the first information or the second information; or
receiving, by the network device, the user data in the OTFS system based on at least one of the first information or the second information.

16. An indication method, comprising:
receiving, by a terminal, at least one of first information or second information, wherein the first information is used to indicate a position of an OTFS scheduling unit in a time-frequency domain, and the second information is used to indicate a position in the OTFS scheduling unit for carrying user data.

17. The indication method according to claim 16, wherein the OTFS scheduling unit comprises at least one OTFS symbol in a delay domain and at least one OTFS subcarrier in a Doppler domain.

18. The indication method according to claim 16 or 17, wherein the first information comprises at least one of:
a first indication, wherein the first indication is used to indicate a first time-domain position of the OTFS scheduling unit; or
a second indication, wherein the second indication is used to indicate a first frequency-domain position of the OTFS scheduling unit.

19. The indication method according to claim 18, wherein the first indication is used to indicate at least two of a start position, a length or an end position of the first time-domain position; and/or
the second indication is used to indicate at least two of a start position, a length or an end position of the first frequency-domain position.

20. The indication method according to claim 19, wherein the first indication comprises a first bitmap, each bit in the first bitmap corresponds to a time-domain position, and a bit value carried by a bit in the first bitmap is used to indicate whether the time-domain position corresponding to the bit in the first bitmap is the first time-domain position; and/or
the second indication comprises a second bitmap, each bit in the second bitmap corresponds to a frequency-domain position, and a bit value carried by a bit in the second bitmap is used to indicate whether the frequency-domain position corresponding to the bit in the second bitmap is the first frequency-domain position.

21. The indication method according to claim 18, wherein the first indication is used to indicate at least one of a period of the first time-domain position, a start position of the first time-domain position within the period, or a length of the first time-domain position within the period; and/or
the second indication is used to indicate at least one of a period of the first frequency-domain position, a start position of the first frequency-domain position within the period, or a length of the first frequency-domain position within the period.

22. The indication method according to any one of claims 18 to 21, wherein indication granularity of the first indication is at least one slot; and indication granularity of the second indication is at least one subband.

23. The indication method according to claim 22, wherein the slot comprises L consecutive symbols in a time domain, and the subband comprises K consecutive subcarriers in a frequency domain, where L and K are both positive integers.

24. The indication method according to any one of claims 16 to 23, wherein the second information comprises at least one of:
a third indication, wherein the third indication is used to indicate a first delay-domain position of the user data in the OTFS scheduling unit; or
a fourth indication, wherein the fourth indication is used to indicate a first Doppler-domain position in the OTFS scheduling unit for carrying the user data.

25. The indication method according to claim 24, wherein the third indication is used to indicate at least two of a start position, a length or an end position of the first delay-domain position; and/or
the fourth indication is used to indicate at least two of a start position, a length or an end position of the first Doppler-domain position.

26. The indication method according to claim 25, wherein the third indication comprises a third bitmap, each bit in the third bitmap corresponds to a delay-domain position, and a bit value carried by a bit in the third bitmap is used to indicate whether the delay-domain position corresponding to the bit in the third bitmap is the first delay-domain position; and/or
the fourth indication comprises a fourth bitmap, each bit in the fourth bitmap corresponds to a Doppler-domain position, and a bit value carried by a bit in the fourth bitmap is used to indicate whether the Doppler-domain position corresponding to the bit in the fourth bitmap is the first Doppler-domain position.

27. The indication method according to claim 26, wherein the third indication is used to indicate at least one of a period of the first delay-domain position, a start position of the first delay-domain position within the period, or a length of the first delay-domain position within the period; and/or
the fourth indication is used to indicate at least one of a period of the first Doppler-domain position, a start position of the first Doppler-domain position within the period, or a length of the first Doppler-domain position within the period.

28. The indication method according to any one of claims 24 to 27, wherein indication granularity of the third indication is P OTFS symbols; and indication granularity of the fourth indication is Q OTFS subcarriers, where P and Q are both positive integers.

29. The indication method according to claim 28, wherein P is less than or equal to a total number of OTFS symbols comprised in the OTFS scheduling unit in the delay domain, and Q is less than or equal to a total number of OTFS subcarriers comprised in the OTFS scheduling unit in the Doppler domain.

30. The indication method according to any one of claims 16 to 29, further comprising at least one of:
receiving, by the terminal, the user data in an OTFS system based on at least one of the first information or the second information; or
sending, by the terminal, the user data in the OTFS system based on at least one of the first information or the second information.

31. An indication method, applied to a communication system, wherein the communication system comprises a terminal and a network device, and the indication method comprises:
sending, by the network device, at least one of first information or second information, wherein the first information is used to indicate a position of an OTFS scheduling unit in a time-frequency domain, and the second information is used to indicate a position in the OTFS scheduling unit for carrying user data; and
receiving, by the terminal, the at least one of the first information or the second information.

32. A first indication apparatus, applied to a network device, comprising:
a sending module configured to send at least one of first information or second information, wherein the first information is used to indicate a position of an OTFS scheduling unit in a time-frequency domain, and the second information is used to indicate a position in the OTFS scheduling unit for carrying user data.

33. A second indication apparatus, applied to a terminal, comprising:
a reception module configured to receive at least one of first information or second information, wherein the first information is used to indicate a position of an OTFS scheduling unit in a time-frequency domain, and the second information is used to indicate a position in the OTFS scheduling unit for carrying user data.

34. A network device, comprising:
one or more processors;
wherein the one or more processors are configured to call an instruction to enable the network device to implement the indication method according to any one of claims 1 to 15.

35. A terminal, comprising:
one or more processors;
wherein the one or more processors are configured to call an instruction to enable the terminal to implement the indication method according to any one of claims 16 to 30.

36. A communication system, comprising a terminal and a network device, wherein the network device is configured to implement the indication method according to any one of claims 1 to 15, and the terminal is configured to implement the indication method according to any one of claims 16 to 30.

37. A storage medium storing therein an instruction, wherein the instruction is executed by a communication device to implement the indication method according to any one of claims 1 to 15 or the indication method according to any one of claims 16 to 30.
